(19) Europäisches Patentamt
European Patent Office
Office européen des brevets

(11) **EP 1 903 575 A2**

(12) **EUROPEAN PATENT APPLICATION**

(43) Date of publication:
**26.03.2008 Bulletin 2008/13**

(51) Int Cl.:
***G11B 27/28*** *(2006.01)*

(21) Application number: **07017976.7**

(22) Date of filing: **13.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **21.09.2006 JP 2006256501**

(71) Applicant: **Sony Corporation**
**Minato-ku**
**Tokyo (JP)**

(72) Inventors:
• **Yamane, Takashi**
**Minato-ku**
**Tokyo (JP)**
• **Ijichi, Susumu**
**Minato-ku**
**Tokyo (JP)**
• **Iwatsu, Takeshi**
**Minato-ku**
**Tokyo (JP)**

(74) Representative: **Müller - Hoffmann & Partner**
**Patentanwälte,**
**Innere Wiener Strasse 17**
**81667 München (DE)**

(54) **Data recording device, data recording method, and data recording program**

(57)    Disclosed herein is a data recording device including: a feature quantity detecting unit configured to detect a predetermined feature quantity of mixed data in which a music part and a talking part are mixed; a sound volume level detecting unit configured to detect sound volume level of the mixed data; a section identifying unit configured to identify a music part section corresponding to the music part and a talking part section corresponding to the talking part in the mixed data on a basis of the feature quantity and the sound volume level; and a recording unit configured to record the mixed data including the music part section and the talking part section identified by the section identifying unit.

FIG. 2

EP 1 903 575 A2

**Description**

CROSS REFERENCES TO RELATED APPLICATIONS

The present invention contains subject matter related to Japanese Patent Application JP 2006-256501 filed with the Japan Patent Office on September 21, 2006, the entire contents of which being incorporated herein by reference.

BACKGROUND OF THE INVENTION

1. Field of the Invention

The present invention relates to a data recording device, a data recording method, and a data recording program, and is suitably applied to a data recording device that records the program data of a radio program broadcast by a radio broadcasting station (a radio broadcasting station will hereinafter be referred to as a radio station), for example.

2. Description of the Related Art

An existing data recording device receives a radio program broadcast from a radio station as program data. Text information related to music data as a part of the program data is continuously multiplexed from a start to a tail end of the section of the music data in the program data. A desired keyword is input to the data recording device in advance for comparison with the text information multiplexed in the program data. When the data recording device receives program data, the data recording device compares the keyword with text information multiplexed in the program data, detects a section where text information matching the keyword is multiplexed in the program data, and cuts out and records the data of the section detected from the program data (the data of the section will hereinafter be referred to as section data) (see Japanese Patent Laid-Open No. Hei 10-51337, for example).

SUMMARY OF THE INVENTION

The accuracy of detection of section data from program data by the data recording device of such a configuration depends on the accuracy of the position of text information multiplexed afterward into the program data. Therefore it may not be said that the section data is necessarily detected from the program data with good accuracy.
The present invention has been made in consideration of the above, and realizes a data recording device, a data recording method, and a data recording program that can identify music data from data including the music data, and record the music data.
According to an embodiment of the present invention, there is provided a data recording device including: a feature quantity detecting unit configured to detect a predetermined feature quantity of mixed data in which a music part and a talking part are mixed; a sound volume level detecting unit configured to detect sound volume level of the mixed data; a section identifying unit configured to identify a music part section corresponding to the music part and a talking part section corresponding to the talking part in the mixed data on a basis of the feature quantity and the sound volume level; and a recording unit configured to record the mixed data including the music part section and the talking part section identified by the section identifying unit.
Thus, in an embodiment of the present invention, from mixed data formed by mixing a music part and a talking part with each other, musical piece likelihood indicating a degree of likelihood of the mixed data being music is detected, and the sound volume level of the mixed data is detected. According to the musical piece likelihood and the sound volume level, a music part section corresponding to the music part and a talking part section corresponding to the talking part in the mixed data are identified. The mixed data in which the music part section and the talking part section are identified is recorded. Thus, when the mixed data is recorded, it is possible to identify and record the music part section and the talking part section of the mixed data, which sections are difficult to identify finally with high accuracy with the musical piece likelihood, in such a manner as to compensate for the difficulty by the sound volume level, and identify and record the music part section and the talking part section of the mixed data, which sections are difficult to identify finally with high accuracy with the sound volume level, in such a manner as to compensate for the difficulty by the musical piece likelihood.
According to the above-described embodiment of the present invention, from mixed data formed by mixing a music part and a talking part with each other, musical piece likelihood indicating a degree of likelihood of the mixed data being music is detected, and the sound volume level of the mixed data is detected. According to the musical piece likelihood and the sound volume level, a music part section corresponding to the music part and a talking part section corresponding to the talking part in the mixed data are identified. The mixed data in which the music part section and the talking part section are identified is recorded. Thus, when the mixed data is recorded, it is possible to identify and record the music part section and the talking part section of the mixed data, which sections are difficult to identify finally with high accuracy with the musical piece likelihood, in such a manner as to compensate for the difficulty by the sound volume level, and identify and record the music part section and the talking part section of the mixed data, which sections are difficult to identify finally with high accuracy with the sound volume level, in such a manner as to compensate for the difficulty by the musical piece likelihood. It is thereby possible to realize a data recording device, a data recording method, and a data recording program that can identify music data from data including the music data, and record the music data.

BRIEF DESCRIPTION OF THE DRAWINGS

FIG. 1 is a block diagram showing an outline of a data recording device according to a first embodiment;
FIG. 2 is a block diagram showing a detailed configuration of a data recording device according to the first embodiment;
FIG. 3 is a block diagram showing a configuration of a section identifying unit;
FIG. 4 is a first graph of assistance in explaining musical piece likelihood and sound volume level;
FIG. 5 is a first block diagram of assistance in explaining transitions of the processing state of a section identifying control unit;
FIG. 6 is a second graph of assistance in explaining the musical piece likelihood and the sound volume level;
FIG. 7 is a second block diagram of assistance in explaining transitions of the processing state of the section identifying control unit;
FIG. 8 is a third block diagram of assistance in explaining transitions of the processing state of the section identifying control unit;
FIG. 9 is a third graph of assistance in explaining the musical piece likelihood and the sound volume level;
FIG. 10 is a fourth graph of assistance in explaining the musical piece likelihood and the sound volume level;
FIG. 11 is a fifth graph of assistance in explaining the musical piece likelihood and the sound volume level;
FIG. 12 is a fourth block diagram of assistance in explaining transitions of the processing state of the section identifying control unit;
FIG. 13 is a fifth block diagram of assistance in explaining transitions of the processing state of the section identifying control unit;
FIG. 14 is a sixth graph of assistance in explaining the musical piece likelihood and the sound volume level;
FIG. 15 is a seventh graph of assistance in explaining the musical piece likelihood and the sound volume level;
FIG. 16 is a sixth block diagram of assistance in explaining transitions of the processing state of the section identifying control unit;
FIG. 17 is a seventh block diagram of assistance in explaining transitions of the processing state of the section identifying control unit;
FIG. 18 is an eighth graph of assistance in explaining the musical piece likelihood and the sound volume level;
FIG. 19 is a ninth graph of assistance in explaining the musical piece likelihood and the sound volume level;
FIG. 20 is a flowchart of a first range detection and section identification process procedure;
FIG. 21 is a flowchart of a second range detection and section identification process procedure;
FIG. 22 is a flowchart of a first silence detection and section identification process procedure;
FIG. 23 is a flowchart of a second silence detection and section identification process procedure;
FIG. 24 is a flowchart of a first silence section determination process procedure;
FIG. 25 is a flowchart of a second silence section determination process procedure;
FIG. 26 is a flowchart of a first state transition reserving process procedure;
FIG. 27 is a flowchart of a second state transition reserving process procedure; and
FIG. 28 is a block diagram showing a circuit configuration of a data recording device according to a second embodiment.

DETAILED DESCRIPTION OF THE PREFERRED EMBODIMENTS

One embodiment of the present invention will hereinafter be described in detail with reference to the drawings.

(1) First Embodiment

(1-1) Outline of First Embodiment

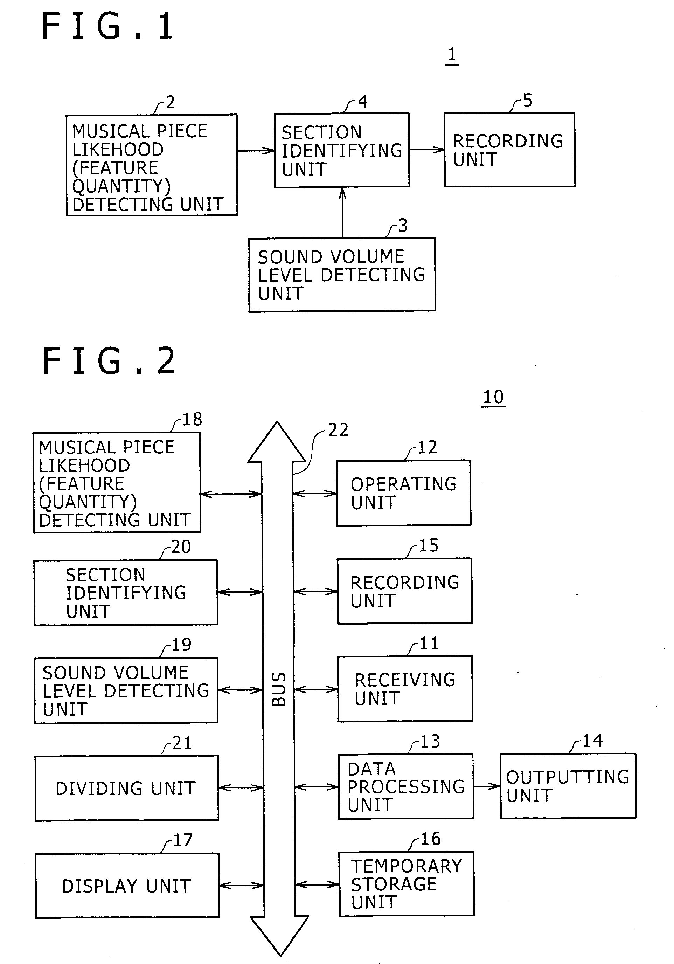

FIG. 1 shows an outline of a configuration of a data recording device 1 according to a first embodiment as a whole. A musical piece likelihood detecting unit 2 of the data recording device 1 detects, from mixed data formed by mixing a music part and a talking part with each other, musical piece likelihood indicating a degree of likelihood of the mixed data being music. A sound volume level detecting unit 3 of the data recording device 1 detects the sound volume level of the mixed data. Further, according to the musical piece likelihood detected by the musical piece likelihood detecting unit 2 and the sound volume level detected by the sound volume level detecting unit 3, a section identifying unit 4 of the data recording device 1 identifies a music part section corresponding to the music part and a talking part section corresponding to the talking part in the mixed data. Further, a recording unit 5 of the data recording device 1 records the mixed data including the music part section and the talking part section identified by the section identifying unit 4. With such a configuration, in recording the mixed data, the data recording device 1 can identify and record the music part section and the talking part section of the mixed data, which sections are difficult to identify finally with high accuracy with the musical piece likelihood, in such a manner as to compensate for the difficulty by the sound volume level, and identify and record the music part section and the talking part section of the mixed data, which sections are difficult to identify finally with high accuracy with the sound volume level, in such a manner as to compensate for the difficulty by the musical piece likelihood. Thus, the data recording device 1 can identify music data from data including the music data with high accuracy, and record the music data.

(1-2) Detailed Configuration of Data Recording Device According to First Embodiment

A detailed hardware configuration based on functional circuit blocks of a data recording device 10 will next be described with reference to FIG. 2.

A receiving unit 11 of the data recording device 10 extracts a radio broadcast wave corresponding to a radio program of a radio station selected by a user from radio broadcast waves of a plurality of radio stations when the radio station is selected and the output of the radio program is requested via an operating unit 12, subjects the radio broadcast wave to predetermined reception processing such as demodulation processing and the like, and sends a program signal of the radio program which signal is obtained as a result of the reception processing to a data processing unit 13. The data processing unit 13 subjects the program signal supplied from the receiving unit 11 to digital processing such as digital-to-analog conversion processing and equalizing processing and the like, and thereby generates program data. At this time, for example a music part corresponding to music aired in the radio program, a talking part corresponding to a talk, and the like are mixed in the program data. In this case, the talk in the radio program refers to a talk between an MC and a guest, words spoken by an anchor for news, traffic information, or a weather forecast, a talk or words included in a commercial, comic storytelling, reading, and the like. Then the data processing unit 13 subjects the generated program data to analog processing such as digital-to-analog processing, amplification processing and the like. The data processing unit 13 obtains a program signal by performing such analog processing, and sends the program signal to an outputting unit 14. Thereby the audio of the radio program based on the program signal is output from the outputting unit 14 to be listened to by the user. The data recording device 10 can thus allow the user to listen to the radio program broadcast by the desired radio station.

In addition, when a radio station is selected and the recording of a radio program is requested via the operating unit 12, the receiving unit 11 extracts a radio broadcast wave as described above, subjects the radio broadcast wave to predetermined reception processing such as demodulation processing and the like, and sends a program signal of the radio program which signal is obtained as a result of the reception processing to the data processing unit 13. The data processing unit 13 subjects the program signal supplied from the receiving unit 11 to digital processing, and then sends program data obtained as a result of the digital processing to a recording unit 15. The recording unit 15 records the program data supplied from the data processing unit 13 as a data file. The data recording device 10 can thus record the radio program broadcast by the desired radio station.

When the reproduction of the program data is thereafter requested via the operating unit 12, the recording unit 15 of the data recording device 10 reads the program data requested to be reproduced, and then sends this program data to the data processing unit 13. The data processing unit 13 subjects the program signal supplied from the recording unit 15 to predetermined digital processing, and thereafter subjects the program data resulting from the digital processing to analog processing such as digital-to-analog processing, amplification processing and the like. The data processing unit 13 obtains a program signal by performing such analog processing, and sends the program signal to the outputting unit 14. Thereby the radio program based on the program signal is output from the outputting unit 14 to be listened to by the user. The data recording device 10 can thus allow the user to listen to the recorded radio program.

The data recording device 10 further includes a temporary storage unit 16. The temporary storage unit 16 temporarily stores program data generated by the data processing unit 13 for a predetermined time separately from the operation of performing analog processing on the program data and then outputting the result from the outputting unit 14 when a radio program is listened to.

Thereby, when a radio program is listened to, the data recording device 10 can output the radio program from the outputting unit 14, and temporarily store the program data corresponding to the output radio program in the temporary storage unit 16. When the radio program output once is requested to be output again via the operating unit 12, the data recording device 10 subjects the program data corresponding to an output for the predetermined time which program data is read from the temporary storage unit 16 to analog processing by the data processing unit 13, and thereby obtains a program signal. The data recording device 10 can thus output the radio program corresponding to the program signal again via the outputting unit 14. Thus, when the user has missed listening to a part of the radio program being output because the user has gone to a bathroom or the like, the data recording device 10 can output the already output part of the radio program after going back in time series by the predetermined time in response to a request by the user so that the user can listen to the part.

Further, according to results of execution of various programs read from a memory not shown in the figure and the recording unit 15 for the output, the recording and the like of radio programs, a display unit 17 of the data recording device 10 displays various screens related to the output, the recording and the like of the radio programs to allow the user to visually check the various screens.

In addition to such a configuration, the data recording device 10 includes a musical piece likelihood detecting unit 18. The musical piece likelihood detecting unit 18 detects musical piece likelihood on the basis of a predetermined feature quantity representing, in a numerical form, a degree of likelihood of program data generated by the data processing unit 13 during the recording of a radio program being music (that is, musical piece) data. That is, the musical piece likelihood detecting unit 18 can be said to be a feature quantity detecting unit 18 in other words.

The musical piece likelihood detecting unit 18 in this case has for example three kinds of musical piece likelihood detecting methods. A first musical piece likelihood detecting method of the three kinds of musical piece likelihood detecting methods utilizes a fact that music and talking are different from each other in energy distribution in each frequency band corresponding to each of 12 notes of one octave. That is, the first musical piece likelihood detecting method extracts energy in the frequency bands of the 12 notes from data in a predetermined processing unit (which data for example corresponds to program data for about one second of a radio program, and will hereinafter be referred to as processing unit data), and detects musical piece likelihood on the basis of a result of the extraction. A second musical piece likelihood detecting method utilizes a fact that a frequency component of the voice of a human is distributed on a relatively low frequency side, and that a frequency component of the sound of musical instruments or the like is distributed on a relatively high frequency side. That is, the second musical piece likelihood detecting method performs a frequency analysis on processing unit data, and detects musical piece likelihood on the basis of a result of the analysis. A third musical piece likelihood detecting method utilizes a fact that because audio data is generally subjected to encoding processing (that is, compression processing) in which a mechanism for generating human voice is modeled, when data of a part of musical instruments or the like other than human voice is subjected to the encoding processing, a difference (which will hereinafter be referred to as an encoding error) between the original waveform of the data and the waveform of data as a processing result obtained by performing codec processing (that is, performing the encoding processing first and then performing decoding processing) on the data is greater than an encoding error obtained from data of a part of voice. That is, the third musical piece likelihood detecting method detects musical piece likelihood on the basis of an encoding error of processing unit data. One of the three kinds of musical piece likelihood detecting methods is applied to the musical piece likelihood detecting unit 18. The three kinds of musical piece likelihood detecting methods will be described below in order.

First, when the first musical piece likelihood detecting method is applied to the musical piece likelihood detecting unit 18, the musical piece likelihood detecting unit 18 starts a first musical piece likelihood detecting process according to a musical piece likelihood detecting program stored in a memory not shown in the figure in advance. Starting the first musical piece likelihood detecting process, the musical piece likelihood detecting unit 18 extracts energy in each frequency band corresponding to each of 12 notes of one octave from processing unit data of program data supplied from the data processing unit 13. Then, when obtaining energy of each piece of processing unit data, the musical piece likelihood detecting unit 18 then performs musical piece likelihood numerical value (feature quantity) conversion processing on the basis of the energy in each frequency band. The musical piece likelihood detecting unit 18 thereby detects musical piece likelihood MS on the basis of a feature quantity indicating, in a numerical form, a degree of likelihood of each piece of processing unit data of the program data being music (that is, musical piece) data. The musical piece likelihood MS is relatively high for a part of a radio program in which part music is dominant, and is relatively low for a part of a radio program in which part human voice is dominant.

Next, the musical piece likelihood detecting unit 18 repeats the above-described process cyclically until the musical piece likelihood detecting unit 18 finishes detecting the musical piece likelihood MS for the processing unit data of the whole of the program data. When the musical piece likelihood detecting unit 18 has completed detecting the musical piece likelihood MS for the processing unit data of the whole of the program data, the musical piece likelihood detecting unit 18 ends the first musical piece likelihood detecting process.

Thus, when the first musical piece likelihood detecting method is applied, the musical piece likelihood detecting unit 18 sequentially detects the musical piece likelihood MS for each piece of processing unit data of the program data.

When the second musical piece likelihood detecting method is applied to the musical piece likelihood detecting unit 18, the musical piece likelihood detecting unit 18 starts a second musical piece likelihood detecting process according to a musical piece likelihood detecting program stored in advance in the memory not shown in the figure. Starting the second musical piece likelihood detecting process, the musical piece likelihood detecting unit 18 captures processing unit data in program data supplied from the data processing unit 13 (the processing unit data is for example formed by data of 1024 samples on a side of passage of a time t, the time t as a time code being a reference point, in the program data to which time during the broadcasting of a radio program is added as the time code). Then the musical piece likelihood detecting unit 18 performs a Fast Fourier Transform (FFT) operation on the processing unit data, and thereby resolves the processing unit data into a frequency spectrum.

Further, the musical piece likelihood detecting unit 18 divides the frequency spectrum sp into a frequency spectrum spn of a low frequency band and a frequency spectrum spn of a high frequency band with a frequency of 8 [KHz], for example, as a boundary. Incidentally, when the sampling frequency of the program data is 44.1 [KHz], the frequency spectrum spn of the low frequency band is sp0 to sp185, and the frequency spectrum spn of the high frequency band is sp186 to sp511. The musical piece likelihood detecting unit 18 calculates the power spectrum a of the low frequency band by squaring a magnitude component of the frequency spectrum sp0 to sp185 of the low frequency band, as expressed in Equation (1).

[Equation 1]

$$a = \sum_{n=0}^{185} (sp_n)^2 \qquad \ldots (1)$$

The musical piece likelihood detecting unit 18 calculates the power spectrum b of the high frequency band by squaring a magnitude component of the frequency spectrum sp186 to sp511 of the high frequency band, as expressed in Equation (2).

[Equation 2]

$$b = \sum_{n=186}^{511} (sp_n)^2 \qquad \ldots (2)$$

The musical piece likelihood detecting unit 18 then calculates a ratio (which will hereinafter be referred to as a power spectrum ratio) Rt between the power spectrum a of the low frequency band and the power spectrum b of the high frequency band according to Equation (3).

[Equation 3]

$$R_t = \frac{b}{a} \qquad \ldots (3)$$

The musical piece likelihood detecting unit 18 then obtains the numerical value x of a moving average of a total of n power spectrum ratios Rt-n obtained up to this point in time according to Equation (4) using a method of calculating a moving average value.

[Equation 4]

$$x = \sum_{m=t-n+1}^{t} R_m \div n \qquad \ldots (4)$$

The musical piece likelihood detecting unit 18 sets the numerical value x of the moving average as musical piece likelihood MS.

Next, the musical piece likelihood detecting unit 18 repeats the above-described process cyclically until the musical piece likelihood detecting unit 18 finishes detecting the musical piece likelihood for the processing unit data of the whole of the program data. When the musical piece likelihood detecting unit 18 has completed detecting the musical piece likelihood MS for the processing unit data of the whole of the program data, the musical piece likelihood detecting unit 18 ends the second musical piece likelihood detecting process.

Thus, when the second musical piece likelihood detecting method is applied, the musical piece likelihood detecting unit 18 sequentially detects the musical piece likelihood MS for each piece of processing unit data of the program data, utilizing a fact that the musical piece likelihood MS is relatively low for a part of the program data of the radio program in which part human voice is dominant, whereas the musical piece likelihood MS is relatively high for a part of the program data of the radio program in which part the sound of a musical instrument or the like other than human voice is dominant, as is clear from the above-described Equation (3).

When the third musical piece likelihood detecting method is applied to the musical piece likelihood detecting unit 18, the musical piece likelihood detecting unit 18 starts a third musical piece likelihood detecting process according to a musical piece likelihood detecting program stored in advance in the memory not shown in the figure. Starting the third musical piece likelihood detecting process, the musical piece likelihood detecting unit 18 captures processing unit data in program data supplied from the data processing unit 13 (the processing unit data is for example formed by data of 200 samples on a side of passage of a time t, the time t as a time code added to the program data being a reference point). Then the musical piece likelihood detecting unit 18 converts the sampling frequency of the processing unit data. Incidentally, the musical piece likelihood detecting unit 18 in this case converts the sampling frequency of the processing unit data to for example 8 [KHz] or 16 [KHz] so as to adjust the sampling frequency of the processing unit data to a frequency that can be handled in subsequent codec processing (codec processing based on a CELP (Code Excited Linear Prediction) system, for example).

The musical piece likelihood detecting unit 18 performs codec processing (that is, performs encoding processing first and then performs decoding processing) on the processing unit data. The musical piece likelihood detecting unit 18 then calculates an encoding error Et from the original waveform c of the processing unit data and the waveform d of processing result data formed by for example data of 200 samples, which are equal in number to those of the original data, the processing result data being obtained by subjecting the processing unit data to the codec processing, so as to obtain a difference between samples, as expressed by Equation (5).

[Equation 5]

$$E_t = \sum_{n=0}^{199} | c_{t+n} - d_{t+delay-n} | \qquad \ldots (5)$$

Incidentally, when performing the operation expressed by Equation (5), the musical piece likelihood detecting unit 18 calculates the encoding error Et in consideration of a delay between a start of the codec processing on the processing unit data and the obtainment of the processing result data by performing the codec processing on the processing unit data.

The musical piece likelihood detecting unit 18 then obtains the numerical value x of a moving average of a total of n encoding errors Et obtained up to this point in time according to Equation (6) using the method of calculating a moving average value.

[Equation 6]

$$x = \sum_{m=t-n+1}^{t} E_m \div n \qquad \qquad \ldots (6)$$

The musical piece likelihood detecting unit 18 sets the numerical value x of the moving average as musical piece likelihood MS.

Next, the musical piece likelihood detecting unit 18 repeats the above-described process cyclically until the musical piece likelihood detecting unit 18 finishes detecting the musical piece likelihood MS for the processing unit data of the whole of the program data. When the musical piece likelihood detecting unit 18 has completed detecting the musical piece likelihood MS for the processing unit data of the whole of the program data, the musical piece likelihood detecting unit 18 ends the third musical piece likelihood detecting process.

Thus, when the third musical piece likelihood detecting method is applied, the musical piece likelihood detecting unit 18 sequentially detects the musical piece likelihood MS for each piece of processing unit data of the program data, utilizing a fact that the musical piece likelihood MS is relatively low for a part of the program data of the radio program in which part human voice is dominant, whereas the musical piece likelihood MS is relatively high for a part of the program data of the radio program in which part the sound of a musical instrument or the like other than human voice is dominant, as is clear from the above-described Equation (5).

The data recording device 10 further includes a sound volume level detecting unit 19. The sound volume level detecting unit 19 detects the sound volume level of program data generated by the data processing unit 13 during the recording of a radio program. Incidentally, the sound volume level detecting unit 19 detects the sound volume level in each time of about 1/128 of a second of the radio program.

The data recording device 10 further includes a section identifying unit 20. During the recording of the radio program, the section identifying unit 20 identifies a music part section corresponding to a music part and a talking part section corresponding to a talking part in the program data generated by the data processing unit 13 according to the musical piece likelihood detected by the musical piece likelihood detecting unit 18 and the sound volume level detected by the sound volume level detecting unit 19.

The data recording device 10 further includes a dividing unit 21. During the recording of the radio program, the dividing unit 21 divides each music part section and each talking part section of the program data which sections are identified by the section identifying unit 20 as music part section data and talking part section data from the program data.

(1-3) Division and Recording of Radio Program

Detailed description will be made below of a radio program dividing and recording process that identifies music part sections and talking part sections in program data, and divides and records each identified music part section and each identified talking part section.

When a radio station is selected via the operating unit 12, and a request to divide a radio program into sections and record the sections is made, the receiving unit 11 starts the radio program dividing and recording process. As described above, the receiving unit 11 extracts a radio broadcast wave of the radio station, subjects the radio broadcast wave to predetermined reception processing such as demodulation processing and the like, and sends a program signal of the radio program which signal is obtained as a result of the reception processing to the data processing unit 13. The data processing unit 13 subjects the program signal supplied from the receiving unit 11 to digital processing, and sends each piece of processing unit data of program data obtained as a result of the digital processing to the musical piece likelihood detecting unit 18, the sound volume level detecting unit 19, and the dividing unit 21.

When processing unit data is supplied from the data processing unit 13 to the musical piece likelihood detecting unit 18, the musical piece likelihood detecting unit 18 detects musical piece likelihood MS using one of the three kinds of detecting methods described above. The musical piece likelihood detecting unit 18 detects such musical piece likelihood MS for the whole of the program data. The musical piece likelihood detecting unit 18 then sends the thus detected musical piece likelihood MS to the section identifying unit 20.

When the processing unit data is supplied from the data processing unit 13 to the sound volume level detecting unit 19, the sound volume level detecting unit 19 detects sound volume level VS in the processing unit data in each time of about 1/128 of a second. The sound volume level detecting unit 19 detects such sound volume level VS for the whole of the program data. The sound volume level detecting unit 19 then sends the thus detected sound volume level VS to the section identifying unit 20.

According to the musical piece likelihood MS sent from the musical piece likelihood detecting unit 18 and the sound volume level VS sent from the sound volume level detecting unit 19, the section identifying unit 20 identifies a music part section and a talking part section mixed in the program data generated by the data processing unit 13. The section identifying unit 20 generates section identifying information DI as a result of identifying the sections, and then sends the section identifying information DI to the dividing unit 21. This section identifying information DI identifies the music part section and the talking part section mixed in the program data such that for example "a section of the program data from 4515 msec to 100687 msec of the radio program is a music part section (1 when binarization into 0 and 1 is performed) and a section of the program data from 100687 msec to 253594 msec of the radio program is a talking part section (0 when binarization into 0 and 1 is performed)".

According to the section identifying information DI sent from the section identifying unit 20, the dividing unit 21 identifies each music part section and each talking part section mixed in the program data sent from the data processing unit 13. Then, when identifying a music part section of the program data, the dividing unit 21 divides one unit of data forming the music part section of the program data as music part section data. The dividing unit 21 sends the music part section data to the recording unit 15. On the other hand, when identifying a talking part section of the program data, the dividing unit 21 divides one unit of data forming the talking part section of the program data as talking part section data. The dividing unit 21 sends the talking part section data to the recording unit 15.

The recording unit 15 sequentially records each piece of music part section data and each piece of talking part section data supplied from the dividing unit 21 as a separate data file. The recording unit 15 thus divides the program data into sections and records the sections. When a request to end the recording of the radio program is made via the operating unit 12, the radio program dividing and recording process is ended.

Thus, at the time of the radio program dividing and recording process, the data recording device 10 divides program data into music part section data and talking part section data, and records the music part section data and the talking part section data in the recording unit 15. Therefore, when reproducing the recorded program data, the data recording device 10 can allow the user to check the contents of the music part section data and the talking part section data only by directly accessing and reproducing the music part section data and the talking part section data recorded in a state of being divided from each other without sequentially reproducing the program data from a start of the program data to allow the user to check the contents of the program data. (1-4) Identification of Sections of Program Data

Detailed description will next be made of a method for identifying a music part section and a talking part section mixed in program data according to musical piece likelihood MS and sound volume level VS in the section identifying unit 20.

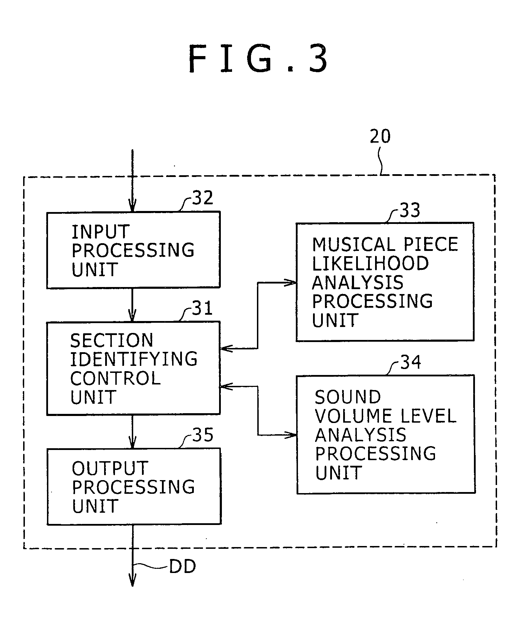

A functional circuit configuration of the section identifying unit 20 will first be described with reference to FIG. 3. The section identifying unit 20 includes a section identifying control unit 31. The section identifying control unit 31 performs centralized control on the exchange of signals and data within the section identifying unit. In addition, the section identifying control unit 31 finally identifies a music part section and a talking part section in program data, and generates section identifying information DI.

The section identifying unit 20 further includes an input processing unit 32. The input processing unit 32 receives the input of musical piece likelihood MS sent from the musical piece likelihood detecting unit 18 and sound volume level VS sent from the sound volume level detecting unit 19, and sends the musical piece likelihood MS and the sound volume level VS the input of which has been received for each piece of predetermined processing unit data to the section identifying control unit 31.

The section identifying unit 20 further includes a musical piece likelihood analysis processing unit 33. The musical piece likelihood analysis processing unit 33 detects that the musical piece likelihood MS obtained via the section identifying control unit 31 changes to be equal to or higher than a predetermined determination threshold value or changes to be lower than the determination threshold value (the musical piece likelihood MS changing to be equal to or higher than the determination threshold value or the musical piece likelihood MS changing to be lower than the determination threshold value will hereinafter be also described simply as the musical piece likelihood MS overpassing the determination threshold value). The musical piece likelihood analysis processing unit 33 sends a result of such detection to the section identifying control unit 31.

The section identifying unit 20 further includes a sound volume level analysis processing unit 34. The sound volume level analysis processing unit 34 analyzes sound volume level in the program data of a radio program according to the sound volume level VS obtained via the section identifying control unit 31. Specifically, the sound volume level analysis processing unit 34 under control of the section identifying control unit 31 detects a position (this position will hereinafter be referred to as a lowest sound volume level position) LL at which the sound volume level is lowest within a predetermined range of the program data, and detects a section (this section will hereinafter be referred to as a silence section) LS where a sound volume level VS lower than a predetermined threshold value (that is, silence) is continued for a predetermined time (for example 1.5 seconds) or more. The sound volume level analysis processing unit 34 sends a result of the detection to the section identifying control unit 31. The lowest sound volume level position LL and the silence section LS are highly likely to be a position (that is, a boundary) where a section changes to another section in the program data, and are thus an important clue to identify the sections.

The section identifying unit 20 further includes an output processing unit 35. The output processing unit 35 obtains section identifying information DI as a result of identifying the sections, the section identifying information DI being generated by the section identifying control unit 31, and then sends the section identifying information DI to the dividing unit 21.

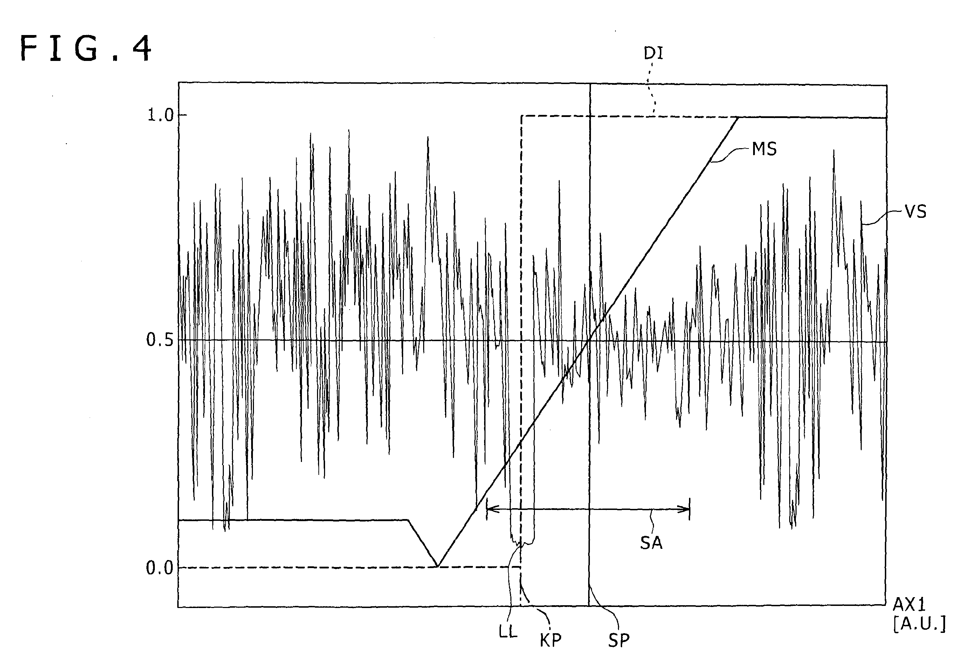

Thus, in the section identifying unit 20, when the musical piece likelihood MS and the sound volume level VS are input to the input processing unit 32, the section identifying control unit 31 sends the musical piece likelihood MS to the musical piece likelihood analysis processing unit 33, and sends the sound volume level VS to the sound volume level analysis processing unit 34. The musical piece likelihood analysis processing unit 33 under control of the section identifying control unit 31 detects that the musical piece likelihood MS overpasses the determination threshold value, and sends a result of the detection to the section identifying control unit 31. The sound volume level analysis processing unit 34 under control of the section identifying control unit 31 detects the lowest sound volume level position LL and the silence section LS, and sends a result of the detection to the section identifying control unit 31. The section identifying control unit 31 thus obtains the musical piece likelihood MS and the sound volume level VS that change along a processing time axis AX1, as shown in FIG. 4, for example.

The section identifying control unit 31 has for example four kinds of methods for identifying sections in program data, from which methods a selection is made to carry out an arbitrary section identifying method. The first to fourth section identifying methods will be described below in order.

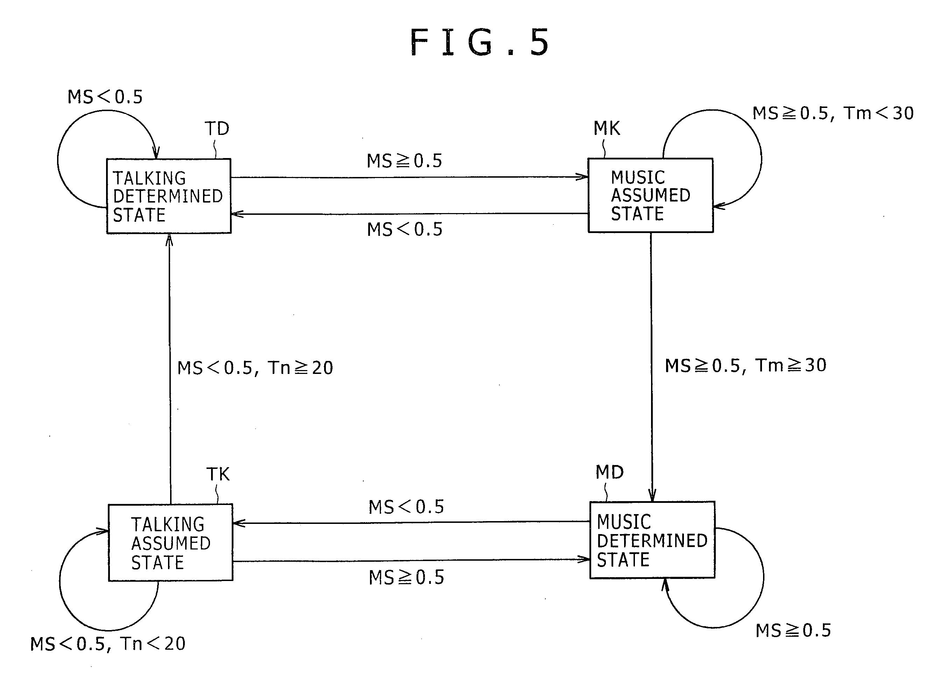

In the case of the first section identifying method, when identifying a music part section and a talking part section, the section identifying control unit 31 assumes four processing states, that is, a first to a fourth state according to the musical piece likelihood MS, as shown in FIG. 5, and makes a transition between the four processing states according to the musical piece likelihood MS sent from the musical piece likelihood analysis processing unit 33. In the first state (this state will hereinafter be referred to as a talking determined state TD), the musical piece likelihood MS at a present point in time is lower than the determination threshold value (for example, in the case of the above configuration, the musical piece likelihood MS is represented by a numerical value of zero to one, and the determination threshold value is for example 0.5), and accordingly a part corresponding to the musical piece likelihood MS in the program data is determined as a talking part section (that is, talking in a radio program). In the second state, it is assumed that when the musical piece likelihood MS becomes equal to or higher than the determination threshold value in the talking determined state TD, there is a possibility of a part corresponding to the musical piece likelihood MS in the program data changing from a talking part section to a music part section (that is, there is a possibility of talking being ended temporarily and music starting to be aired in the radio program). The second state is thus a temporary processing state (this state will hereinafter be referred to as a music assumed state MK) to which a transition is made from the talking determined state TD to determine whether there is a boundary between the sections. In the third state (this state will hereinafter be referred to as a music determined state MD), the musical piece likelihood MS at a present point in time is equal to or higher than the determination threshold value, and accordingly a part corresponding to the musical piece likelihood MS in the program data is determined as a music part section (that is, music in the radio program). In the fourth state, it is assumed that when the musical piece likelihood MS becomes lower than the determination threshold value in the music determined state MD, there is a possibility of a part corresponding to the musical piece likelihood MS in the program data changing from a music part section to a talking part section (that is, there is a possibility of music being ended temporarily and talking starting to be aired in the radio program). The fourth state is thus a temporary processing state (this state will hereinafter be referred to as a talking assumed state TK) to which a transition is made from the music determined state MD to determine whether there is a boundary between the sections.

Thus, the section identifying control unit 31 changes the processing state when the musical piece likelihood MS overpasses the determination threshold value in the talking determined state TD and the music determined state MD, and thereby identifies a music part section and a talking part section of the program data. In the following, a case where the musical piece likelihood MS changes to become equal to or higher than the determination threshold value in the talking determined state TD and a case where the musical piece likelihood MS changes to become lower than the determination threshold value in the music determined state MD will be described separately.

(1-4-1) Case of Musical Piece Likelihood Changing to Become Equal to or Higher Than Determination Threshold Value in Talking Determined State

First, as shown in FIG. 4, for example, when musical piece likelihood MS lower than the determination threshold value is sent from the musical piece likelihood analysis processing unit 33 to the section identifying control unit 31, the section identifying control unit 31 determines that the musical piece likelihood MS indicates talking in a radio program. The section identifying control unit 31 changes the processing state to the talking determined state TD, and continues the talking determined state TD as long as the musical piece likelihood MS newly sent from the musical piece likelihood analysis processing unit 33 is lower than the determination threshold value. When the musical piece likelihood MS newly sent from the musical piece likelihood analysis processing unit 33 becomes equal to or higher than the determination threshold value in the talking determined state TD, there is a possibility of talking being ended and music starting to be aired in the radio program, and accordingly the section identifying control unit 31 starts a first range detection and section identification process for identifying a talking part section and a music part section in program data by performing, as a starting point, detection of a range where the talking part section changes to the music part section in the program data on the basis of the musical piece likelihood MS.

Starting the first range detection and section identification process, in response to the changing of the musical piece likelihood MS on the program data to the determination threshold value or higher, the section identifying control unit 31 detects a range having a width of a few seconds on a preceding side and a subsequent side on the processing time axis AX1 with a reference position (this position will hereinafter be referred to as a state transition position) SP where the processing state is changed as a center, as a range (this range will hereinafter be referred to as a section boundary candidate range) SA that is highly likely to include a boundary where the talking part section changes to the music part section in the program data. Then, the section identifying control unit 31 detects a lowest sound volume level position LL in the detected section boundary candidate range SA by the sound volume level analysis processing unit 34, and stores the detected lowest sound volume level position LL in a memory not shown in the figure as a position (this position will hereinafter be referred to as a section boundary candidate position) KP that is highly likely to be the boundary where the talking part section changes to the music part section in the program data. The section identifying control unit 31 then changes the processing state from the talking determined state TD to the music assumed state MK.

The section identifying control unit 31 monitors to determine whether the numerical value of the musical piece likelihood MS sent from the musical piece likelihood analysis processing unit 33 is equal to or higher than the determination threshold value for a predetermined determination time (this determination time will hereinafter be referred to as a music assumption determination time) in the music assumed state MK. This music assumption determination time is for example set to a time length (for example 30 seconds in this case) that prevents a bell sound or a part of music inserted for a short time during talking in a radio program from being identified as a music part section of the program data.

The section identifying control unit 31 in the music assumed state MK clocks a time (this time will hereinafter be referred to as a music assumption continuation time) Tm during which the music assumed state MK is continued. When the numerical value of new musical piece likelihood MS sent from the musical piece likelihood analysis processing unit 33 changes to be lower than the determination threshold value before the music assumption continuation time Tm changes to be the music assumption determination time or more, the section identifying control unit 31 determines that the musical piece likelihood MS has been equal to or higher than the determination threshold value for a short time because a bell sound or a part of music is inserted for the short time in a talking part of the radio program, for example. The section identifying control unit 31 thus makes a transition so as to return the processing state from the music assumed state MK to the talking determined state TD. When the musical piece likelihood MS equal to or higher than the determination threshold value continues being supplied from the musical piece likelihood analysis processing unit 33 before the music assumption continuation time Tm changes to be the music assumption determination time or more in the music assumed state MK, the section identifying control unit 31 reserves determination and continues the music assumed state MK. When the music assumption continuation time Tm has become the music assumption determination time or more while the numerical value of the musical piece likelihood MS continues being equal to or higher than the determination threshold value in the music assumed state MK, the section identifying control unit 31 determines that talking is ended temporarily and music has started to be aired in the radio program. The section identifying control unit 31 thus identifies the section boundary candidate position KP as a section boundary, identifies a side preceding the section boundary in time series in the program data as the talking part section, and identifies a side succeeding the section boundary in time series in the program data as the music part section. The section identifying control unit 31 then changes the processing state from the music assumed state MK to the music determined state MD, and ends the first range detection and section identification process. In addition, the section identifying control unit 31 generates section identifying information DI as a result of identifying the sections, and then sends the section identifying information DI to the dividing unit 21 via the output processing unit 35.

Thus, at the time of the first range detection and section identification process, the section identifying control unit 31 identifies the talking part section and the music part section of the program data according to the musical piece likelihood MS and the sound volume level VS. That is, the section identifying control unit 31 identifies the talking part section and the music part section of the program data according to the musical piece likelihood MS with which switching between the talking part section and the music part section in the program data can be detected but it is difficult to identify the specific boundary between the talking part section and the music part section in the program data and the sound volume level VS with which the specific boundary between the talking part section and the music part section in the program data can be identified but it is difficult to detect the switching between the talking part section and the music part section in the program data. The section identifying control unit 31 can thereby identify the talking part section and the music part section of the program data with high accuracy.

In addition, at the time of the first range detection and section identification process, the section identifying control unit 31 detects the section boundary candidate range SA according to the changing of the musical piece likelihood MS to the determination threshold value or higher, and detects the section boundary candidate position KP according to the lowering of the sound volume level VS in the section boundary candidate range SA. The section identifying control unit 31 thus identifies the position where the talking part section of the program data changes to the music part section. Therefore, in a case where switching between talking and music is performed in the radio program without a silence section LS being inserted between the talking and the music, or in a case where the talking and the music in the radio program overlap each other and then the switching between the talking and the music is performed, when there is a variation in sound volume level VS at the position at which the airing of only the music starts, the section identifying control unit 31 detects a range in which the switching from the talking to the music is performed without interruption in the radio program according to the changing of the musical piece likelihood MS to the determination threshold value or higher, and detects the position at which the airing of only the music starts in the radio program according to the lowering of the sound volume level VS in the detected range. The section identifying control unit 31 can thus identify the talking part section and the music part section of the program data. In addition, in this case, the section identifying control unit 31 can avoid including a tail end of the talking part section in a start of the finally identified music part section in the program data.

Further, at the time of the first range detection and section identification process, the section identifying control unit 31 changes the processing state from the talking determined state TD to the music assumed state MK according to the changing of the musical piece likelihood MS to the determination threshold value or higher. However, when the musical piece likelihood MS changes to be lower than the determination threshold value before the passage of the music assumption determination time, the section identifying control unit 31 determines that talking is continued in the radio program, and thus the section identifying control unit 31 returns the processing state from the music assumed state MK to the talking determined state TD. Therefore, when a bell sound, a part of music or the like is inserted for a short time during talking in the radio program, the section identifying control unit 31 can set a section of the program data which section corresponds to the inserted short-duration music as a part of the talking part section without identifying the section of the program data as a music part section. Thus, rather than simply identifying the music part section and the talking part section of the program data on the basis of music and talking, the section identifying control unit 31 can identify the music part section and the talking part section of the program data such that the talking part section and the music part section form significant units as talking and music in the radio program. (1-4-2) Case of Musical Piece Likelihood Changing to Become Lower Than Determination Threshold Value in Music Determined State

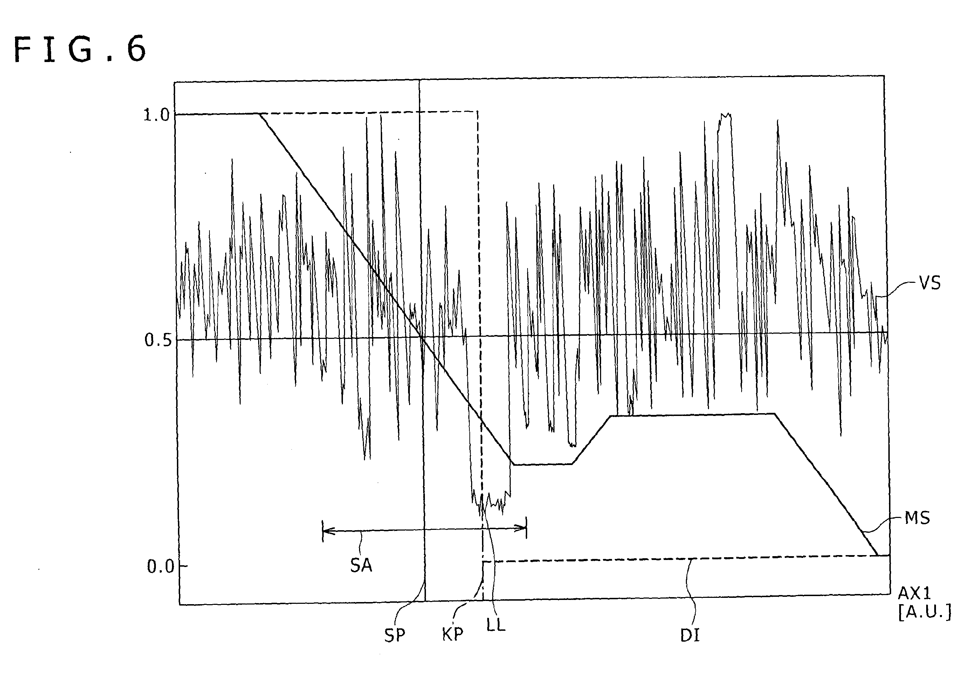

Next, as shown in FIG. 6, for example, when musical piece likelihood MS equal to or higher than the determination threshold value is sent from the musical piece likelihood analysis processing unit 33 to the section identifying control unit 31, the section identifying control unit 31 determines that the musical piece likelihood MS indicates music in a radio program. The section identifying control unit 31 changes the processing state to the music determined state MD, and continues the music determined state MD as long as the musical piece likelihood MS newly sent from the musical piece likelihood analysis processing unit 33 is equal to or higher than the determination threshold value. When the musical piece likelihood MS newly sent from the musical piece likelihood analysis processing unit 33 becomes lower than the determination threshold value in the music determined state MD, there is a possibility of music being ended and talking starting to be aired in the radio program, and accordingly the section identifying control unit 31 starts a second range detection and section identification process for identifying a music part section and a talking part section in program data by performing, as a starting point, detection of a range where the music part section changes to the talking part section in the program data on the basis of the musical piece likelihood MS.

Starting the second range detection and section identification process, the section identifying control unit 31 detects a section boundary candidate range SA having a width of a few seconds on a preceding side and a subsequent side on the processing time axis AX1 with a state transition position SP on the program data as a center. In addition, the section identifying control unit 31 detects a lowest sound volume level position LL in the detected section boundary candidate range SA by the sound volume level analysis processing unit 34, and stores the detected lowest sound volume level position LL in the memory not shown in the figure as a section boundary candidate position KP. The section identifying control unit 31 then changes the processing state from the music determined state MD to the talking assumed state TK.

The section identifying control unit 31 monitors to determine whether the numerical value of the musical piece likelihood MS sent from the musical piece likelihood analysis processing unit 33 is lower than the determination threshold value for a predetermined determination time (this determination time will hereinafter be referred to as a talking assumption determination time) in the talking assumed state TK. This talking assumption determination time is for example set to a time length (for example 20 seconds in this case) that prevents speech of a singer inserted for a short time in music of a genre such as hip-hop or the like from being identified as a talking part section of the program data.

The section identifying control unit 31 in the talking assumed state TK clocks a time (this time will hereinafter be referred to as a talking assumption continuation time) Tn during which the talking assumed state TK is continued. When the numerical value of new musical piece likelihood MS sent from the musical piece likelihood analysis processing unit 33 changes to be equal to or higher than the determination threshold value before the talking assumption continuation time Tn changes to be the talking assumption determination time or more, the section identifying control unit 31 determines that speech of a singer is inserted for a short time in music of the radio program, and that accordingly the musical piece likelihood MS has been lower than the determination threshold value for the short time. The section identifying control unit 31 thus makes a transition so as to return the processing state from the talking assumed state TK to the music determined state MD. When the musical piece likelihood MS lower than the determination threshold value continues being supplied from the musical piece likelihood analysis processing unit 33 before the talking assumption continuation time Tn changes to be the talking assumption determination time or more in the talking assumed state TK, the section identifying control unit 31 reserves determination and continues the talking assumed state TK. When the talking assumption continuation time Tn has become the talking assumption determination time or more while the numerical value of the musical piece likelihood MS continues being lower than the determination threshold value in the talking assumed state TK, the section identifying control unit 31 determines that music is ended temporarily and talking has started to be aired in the radio program. The section identifying control unit 31 thus identifies the section boundary candidate position KP as a section boundary, identifies a side preceding the section boundary in time series in the program data as the music part section, and identifies a side succeeding the section boundary in time series in the program data as the talking part section. The section identifying control unit 31 then changes the processing state from the talking assumed state TK to the talking determined state TD, and ends the second range detection and section identification process. In addition, the section identifying control unit 31 generates section identifying information DI as a result of identifying the sections, and then sends the section identifying information DI to the dividing unit 21 via the output processing unit 35.

Thus, at the time of the second range detection and section identification process, the section identifying control unit 31 identifies the music part section and the talking part section of the program data according to the musical piece likelihood MS and the sound volume level VS. That is, the section identifying control unit 31 identifies the music part section and the talking part section of the program data according to the musical piece likelihood MS with which switching between the music part section and the talking part section in the program data can be detected but it is difficult to identify the specific boundary between the music part section and the talking part section in the program data and the sound volume level VS with which the specific boundary between the music part section and the talking part section in the program data can be identified but it is difficult to detect the switching between the music part section and the talking part section in the program data. The section identifying control unit 31 can thereby identify the music part section and the talking part section of the program data with high accuracy.

In addition, at the time of the second range detection and section identification process, the section identifying control unit 31 detects the section boundary candidate range SA according to the changing of the musical piece likelihood MS to a value lower than the determination threshold value, and detects the section boundary candidate position KP according to the lowering of the sound volume level VS in the section boundary candidate range SA. The section identifying control unit 31 thus identifies the boundary where the music part section of the program data changes to the talking part section. Therefore, in a case where switching between music and talking is performed in the radio program without a silence section LS being inserted between the talking and the music, or in a case where the music and the talking in the radio program overlap each other and then the switching between the talking and the music is performed, when there is a variation in sound volume level VS at the position at which the airing of the talking starts, the section identifying control unit 31 detects a range in which the switching from the music to the talking is performed without interruption in the radio program according to the changing of the musical piece likelihood MS to a value lower than the determination threshold value, and detects the position at which the airing of the talking starts in the radio program (that is, the position where the section in which only the music is aired is ended in the radio program) according to the lowering of the sound volume level VS in the detected range. The section identifying control unit 31 can thus identify the music part section and the talking part section of the program data. In addition, in this case, the section identifying control unit 31 can avoid including a start of the talking part section in a tail end of the finally identified music part section in the program data.

Further, at the time of the second range detection and section identification process, the section identifying control unit 31 changes the processing state from the music determined state MD to the talking assumed state TK according to the changing of the musical piece likelihood MS to a value lower than the determination threshold value. However, when the musical piece likelihood MS changes to be equal to or higher than the determination threshold value before the passage of the talking assumption determination time, the section identifying control unit 31 determines that music is continued in the radio program, and thus the section identifying control unit 31 returns the processing state from the talking assumed state TK to the music determined state MD. Therefore, when speech of a singer or the like is inserted for a short time in the music of the radio program, the section identifying control unit 31 can set a section of the program data which section corresponds to the inserted short-duration speech as a part of the music part section without identifying the section of the program data as a talking part section. Thus, rather than simply identifying the talking part section and the music part section of the program data on the basis of talking and music, the section identifying control unit 31 can identify the talking part section and the music part section of the program data such that the music part section and the talking part section form significant units as music and talking in the radio program.

(1-5) Identifying Each Section of Program Data by Performing Detection of Silence Section as Starting Point

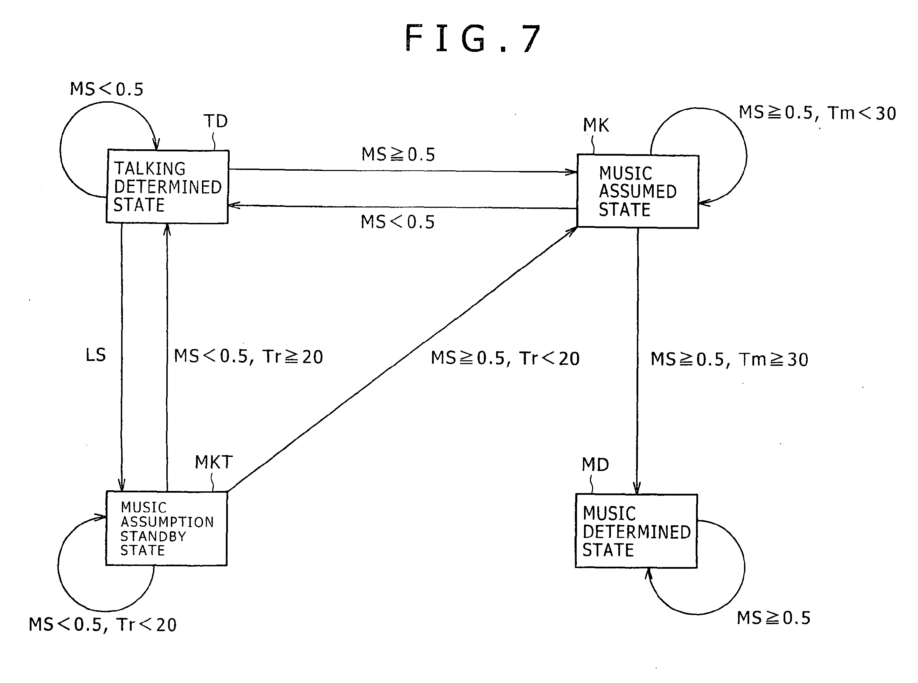

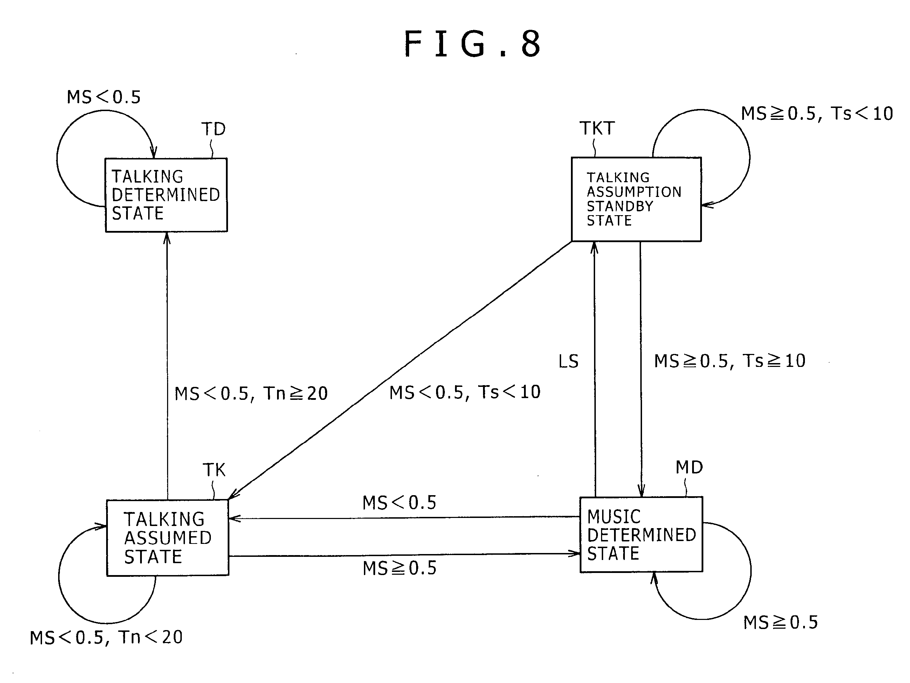

Next, in the case of the second section identifying method, as shown in FIG. 7 and FIG. 8, the section identifying control unit 31 can assume two new processing states in addition to the four processing states (the talking determined state TD, the talking assumed state TK, the music determined state MD, and the music assumed state MK) of the first section identifying method described above. In one state, it is assumed that when a silence section LS is detected in the talking determined state TD, there is a possibility that the musical piece likelihood MS will hereafter change to become equal to or higher than the determination threshold value (that is, there is a possibility of talking being ended and music starting in the radio program). The one state is thus a temporary state (this state will hereinafter be referred to as a music assumption standby state) MKT to which a transition is made, as a preliminary stage for making a transition from the talking determined state TD to the music assumed state MK (FIG. 7). In the other state, it is assumed that when a silence section LS is detected in the music determined state MD, there is a possibility that the musical piece likelihood MS will hereafter change to become lower than the determination threshold value (that is, there is a possibility of music being ended and talking starting in the radio program). The other state is thus a temporary state (this state will hereinafter be referred to as a talking assumption standby state) TKT to which a transition is made, as a preliminary stage for making a transition from the music determined state MD to the talking assumed state TK (FIG. 8).

Thus, performing, as a starting point, detection of a silence section LS in the talking determined state TD or detection of a silence section LS in the music determined state MD, the section identifying control unit 31 changes the processing state, and is thereby able to identify a talking part section and a music part section of program data. In the following, description will be made separately of a case where a silence section LS is detected in the talking determined state TD (FIG. 7) and a case where a silence section LS is detected in the music determined state MD (FIG. 8).

(1-5-1) Case of Detecting Silence Section in Talking Determined State

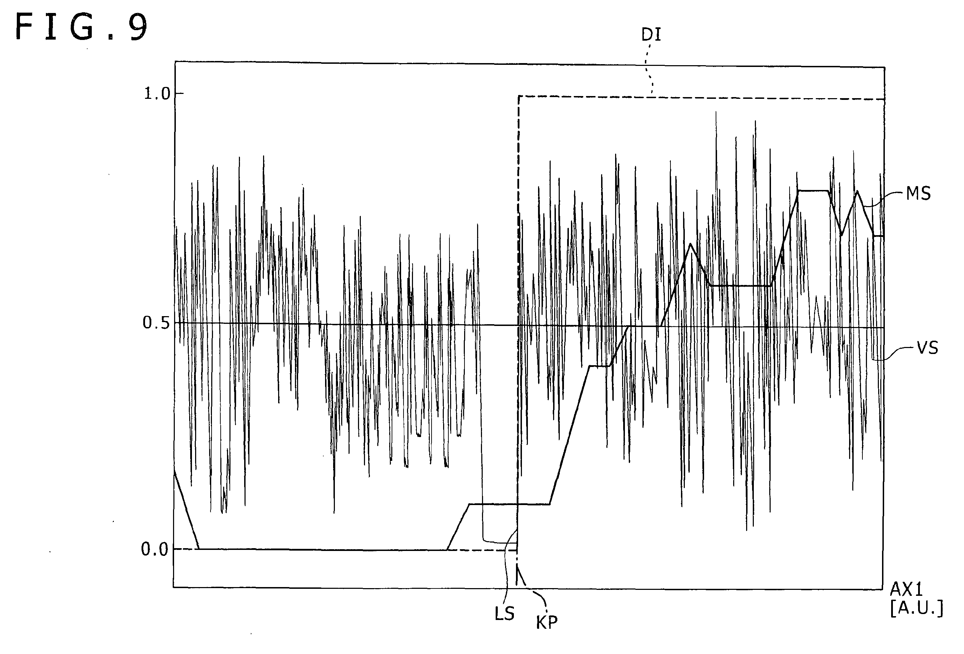

First, as shown in FIG. 9, for example, when musical piece likelihood MS lower than the determination threshold value is sent from the musical piece likelihood analysis processing unit 33 to the section identifying control unit 31, the section identifying control unit 31 determines that the musical piece likelihood MS indicates talking in a radio program. The section identifying control unit 31 changes the processing state to the talking determined state TD, and continues the talking determined state TD as long as the musical piece likelihood MS newly sent from the musical piece likelihood analysis processing unit 33 is lower than the determination threshold value. When the section identifying control unit 31 detects a silence section LS by the sound volume level analysis processing unit 34 in the talking determined state TD, there is a possibility of talking being ended and music being started in the radio program, and accordingly the section identifying control unit 31 starts a first silence detection and section identification process for identifying a talking part section and a music part section of program data by performing, as a starting point, the detection of the silence section LS.

Starting the first silence detection and section identification process, the section identifying control unit 31 sets a position where the sound volume level VS rises to a sound level in the silence section LS detected according to the sound volume level VS by the sound volume level analysis processing unit 34 as a section boundary candidate position KP, and stores the section boundary candidate position KP in the memory not shown in the figure. The section identifying control unit 31 then changes the processing state from the talking determined state TD to the music assumption standby state MKT.

The section identifying control unit 31 monitors to determine whether the numerical value of the musical piece likelihood MS sent from the musical piece likelihood analysis processing unit 33 changes to become equal to or higher than the determination threshold value during a predetermined determination time (this determination time will hereinafter be referred to as a first standby determination time) in the music assumption standby state MKT. This first standby determination time is a standby time before a transition to the music assumed state MK, and is thus set shorter than the music assumption determination time (30 seconds) in the music assumed state MK (for example 20 seconds in this case).

The section identifying control unit 31 in the music assumption standby state MKT clocks a time (this time will hereinafter be referred to as a music assumption standby time) Tr during which the music assumption standby state MKT is continued. When the numerical value of new musical piece likelihood MS sent from the musical piece likelihood analysis processing unit 33 remains lower than the determination threshold value even after the music assumption standby time Tr becomes the first standby determination time or more, the section identifying control unit 31 determines that the silence section LS has simply been detected according to presence of silence during talking in the radio program, for example. The section identifying control unit 31 thus makes a transition so as to return the processing state from the music assumption standby state MKT to the talking determined state TD. When the musical piece likelihood MS lower than the determination threshold value continues being supplied from the musical piece likelihood analysis processing unit 33 before the music assumption standby time Tr changes to be the first standby determination time or more in the music assumption standby state MKT, the section identifying control unit 31 reserves determination and continues the music assumption standby state MKT. When the numerical value of the musical piece likelihood MS changes to be equal to or higher than the determination threshold value before the music assumption standby time Tr changes to be the first standby determination time or more in the music assumption standby state MKT, the section identifying control unit 31 determines that there is a possibility of talking being ended temporarily and music starting to be aired in the radio program. The section identifying control unit 31 thus changes the processing state from the music assumption standby state MKT to the music assumed state MK.

Then, at the time of the first silence detection and section identification process, after changing the processing state to the music assumed state MK, the section identifying control unit 31 performs the same process as the above-described first range detection and section identification process, and thereby identifies the talking part section and the music part section of the program data. The section identifying control unit 31 then changes the processing state from the music assumed state MK to the music determined state MD, and ends the first silence detection and section identification process. In addition, the section identifying control unit 31 generates section identifying information DI as a result of identifying the sections, and then sends the section identifying information DI to the dividing unit 21 via the output processing unit 35.

Thus, at the time of the first silence detection and section identification process, the section identifying control unit 31 detects the section boundary candidate position KP in response to the detection of the silence section LS on the basis of the sound volume level VS, and thereafter identifies the position (that is, the section boundary) at which the talking part section changes to the music part section in the program data according to the changing of the musical piece likelihood MS to the determination threshold value or higher. Therefore, in the case where the silence section LS is inserted between the talking and the music in the radio program, the section identifying control unit 31 can identify the talking part section and the music part section of the program data with high accuracy by detecting the silence section LS and then checking the value of the musical piece likelihood MS.

In addition, in this case, even when music whose musical piece likelihood MS increases only slowly because, for example, a start of the music is very quiet, or only low notes are used is included in the radio program, the section identifying control unit 31 can identify the talking part section and the music part section of the program data as long as a silence section LS is included at a start of the music.

Further, at the time of the first silence detection and section identification process, the section identifying control unit 31 detects the rising edge position of the silence section LS detected by the sound volume level analysis processing unit 34 as the section boundary candidate position KP. It is therefore possible to minimize a silence part included at a start of the finally identified music part section, and thereby improve a listening feeling when the music part section is reproduced afterward.

Further, at the time of the first silence detection and section identification process, the section identifying control unit 31 changes the processing state from the talking determined state TD to the music assumption standby state MKT in response to the detection of the silence section LS. However, when the musical piece likelihood MS does not change to be equal to or higher than the determination threshold value before the passage of the first standby determination time, the section identifying control unit 31 determines that talking is continued in the radio program, and thus the section identifying control unit 31 makes a transition so as to return the processing state from the music assumption standby state MKT to the talking determined state TD. That is, when a silence part is inserted for a short time during talking in the radio program, for example, the section identifying control unit 31 can determine that the talking part section is continued without being misled by the inserted silence part. Thus, rather than simply identifying the music part section and the talking part section of the program data on the basis of whether there is a silence section LS, the section identifying control unit 31 can identify the talking part section and the music part section of the program data such that the talking part section and the music part section form significant units as talking and music in the radio program.

(1-5-2) Case of Detecting Silence Section in Music Determined State

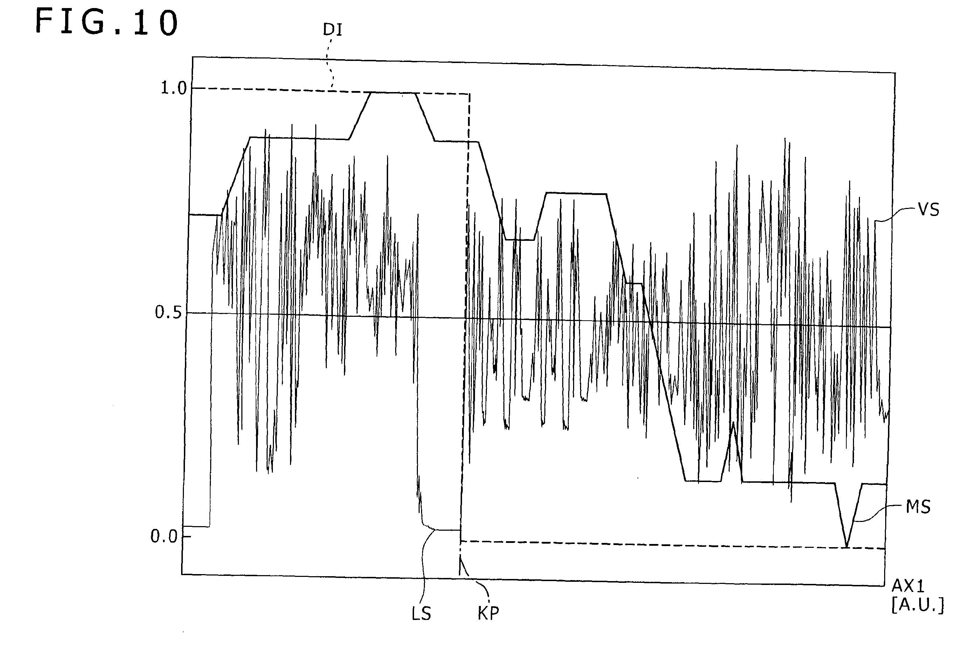

Next, as shown in FIG. 10, for example, when musical piece likelihood MS equal to or higher than the determination threshold value is sent from the musical piece likelihood analysis processing unit 33 to the section identifying control unit 31, the section identifying control unit 31 determines that the musical piece likelihood MS indicates music in a radio program. The section identifying control unit 31 changes the processing state to the music determined state MD, and continues the music determined state MD as long as the musical piece likelihood MS newly sent from the musical piece likelihood analysis processing unit 33 is equal to or higher than the determination threshold value. When the section identifying control unit 31 detects a silence section LS by the sound volume level analysis processing unit 34 in the music determined state MD, there is a possibility of music being ended and talking starting to be aired in the radio program, and accordingly the section identifying control unit 31 starts a second silence detection and section identification process for identifying a music part section and a talking part section of program data by performing, as a starting point, the detection of the silence section LS.

Starting the second silence detection and section identification process, the section identifying control unit 31 sets a position where the sound volume level VS rises to a sound level in the silence section LS detected according to the sound volume level VS by the sound volume level analysis processing unit 34 as a section boundary candidate position KP, and stores the section boundary candidate position KP in the memory not shown in the figure. The section identifying control unit 31 then changes the processing state from the music determined state MD to the talking assumption standby state TKT.

The section identifying control unit 31 monitors to determine whether the numerical value of the musical piece likelihood MS sent from the musical piece likelihood analysis processing unit 33 changes to become lower than the determination threshold value during a predetermined determination time (this determination time will hereinafter be referred to as a second standby determination time) in the talking assumption standby state TKT. This second standby determination time is a standby time before a transition to the talking assumed state TK, and is thus set shorter than the talking assumption determination time (20 seconds) in the talking assumed state TK (for example 10 seconds in this case).

The section identifying control unit 31 in the talking assumption standby state TKT clocks a time (this time will hereinafter be referred to as a talking assumption standby time) Ts during which the talking assumption standby state TKT is continued. When the musical piece likelihood MS equal to or higher than the determination threshold value continues being supplied from the musical piece likelihood analysis processing unit 33 before the talking assumption standby time Ts changes to be the second standby determination time or more, the section identifying control unit 31 reserves determination and continues the talking assumption standby state TKT. When the numerical value of the musical piece likelihood MS becomes lower than the determination threshold value before the talking assumption standby time Ts changes to be the second standby determination time or more in the talking assumption standby state TKT, the section identifying control unit 31 determines that there is a possibility of music being ended and talking starting to be aired in the radio program. The section identifying control unit 31 thus changes the processing state from the talking assumption standby state TKT to the talking assumed state TK.

Then, at the time of the second silence detection and section identification process, after changing the processing state to the talking assumed state TK, the section identifying control unit 31 performs the same process as the above-described second range detection and section identification process, and thereby identifies the music part section and the talking part section of the program data. The section identifying control unit 31 then changes the processing state from the talking assumed state TK to the talking determined state TD.

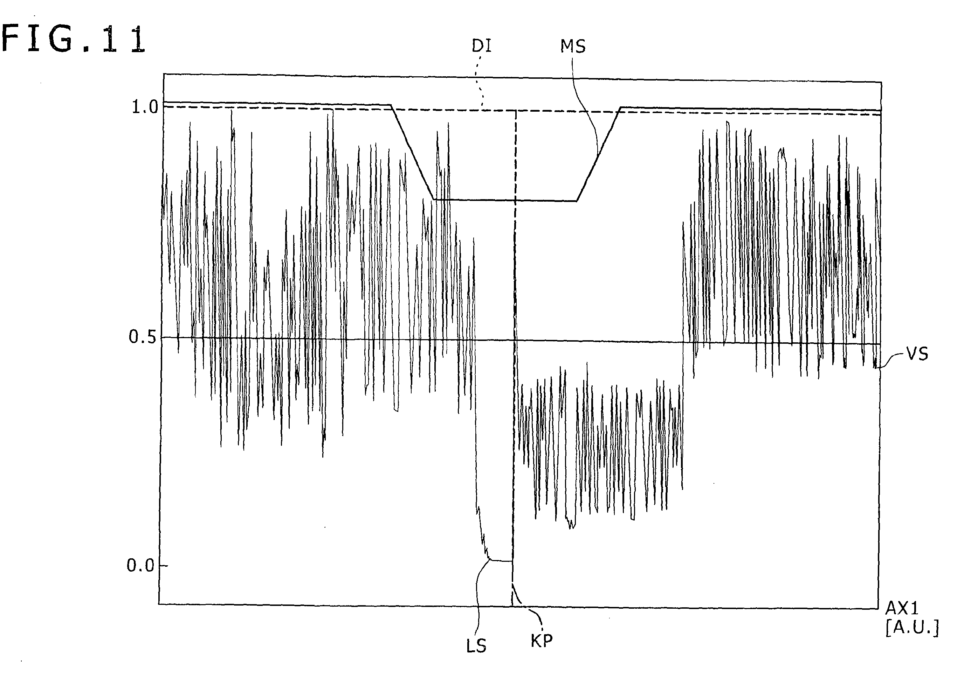

On the other hand, as shown in FIG. 11, for example, when the section identifying control unit 31 detects a silence section LS and makes a transition to the talking assumption standby state TKT, and the numerical value of new musical piece likelihood MS sent from the musical piece likelihood analysis processing unit 33 does not change to become lower than the determination threshold value before the talking assumption standby time Ts changes to be the second standby determination time or more, the section identifying control unit 31 determines that music (that is, a musical piece) in the radio program changes to a next piece of music after the silence section LS. The section identifying control unit 31 identifies the section boundary candidate position KP as a section boundary, and identifies a side preceding the section boundary and a side succeeding the section boundary in time series in the program data as separate music part sections, respectively. The section identifying control unit 31 then makes a transition so as to return from the talking assumption standby state TKT to the music determined state MD, and ends the second silence detection and section identification process. In addition, the section identifying control unit 31 generates section identifying information DI as a result of identifying the sections, and then sends the section identifying information DI to the dividing unit 21 via the output processing unit 35.

Thus, at the time of the second silence detection and section identification process, the section identifying control unit 31 detects the section boundary candidate position KP in response to the detection of the silence section LS on the basis of the sound volume level VS, and thereafter identifies the position (that is, the section boundary) at which the music part section changes to the talking part section in the program data according to the changing of the musical piece likelihood MS to a value lower than the determination threshold value. Therefore, in the case where the silence section LS is inserted between the music and the talking in the radio program, the section identifying control unit 31 can identify the music part section and the talking part section of the program data with high accuracy by detecting the silence section LS and then checking the value of the musical piece likelihood MS.

In addition, in this case, even when speech that makes the musical piece likelihood MS decrease only slowly because, for example, background music is superimposed and aired is included in the radio program, the section identifying control unit 31 can identify the music part section and the talking part section of the program data as long as a silence section LS is included at a start of the speech.

Further, at the time of the second silence detection and section identification process, the section identifying control unit 31 detects the rising edge position of the silence section LS detected by the sound volume level analysis processing unit 34 as the section boundary candidate position KP. It is therefore possible to minimize a silence part included at a start of the finally identified talking part section, and thereby improve a listening feeling when the talking part section is reproduced afterward.

Further, at the time of the second silence detection and section identification process, the section identifying control unit 31 changes the processing state from the music determined state MD to the talking assumption standby state TKT in response to the detection of the silence section LS. However, when the musical piece likelihood MS does not change to be lower than the determination threshold value before the passage of the second standby determination time, the section identifying control unit 31 determines that music in the radio program has changed to a next piece of music after the silence section LS. The section identifying control unit 31 identifies the section change candidate position KP as a section boundary, and identifies a side preceding the section boundary and a side succeeding the section boundary in time series in the program data as separate music part sections, respectively. That is, when a plurality of pieces of music are inserted consecutively in the radio program with a silence part inserted between the plurality of pieces of music, the section identifying control unit 31 can detect each piece of music as one significant musical piece without erroneously detecting the plurality of consecutive pieces of music as one piece of music. (1-6) Prevention of Erroneous Detection of Silence Section

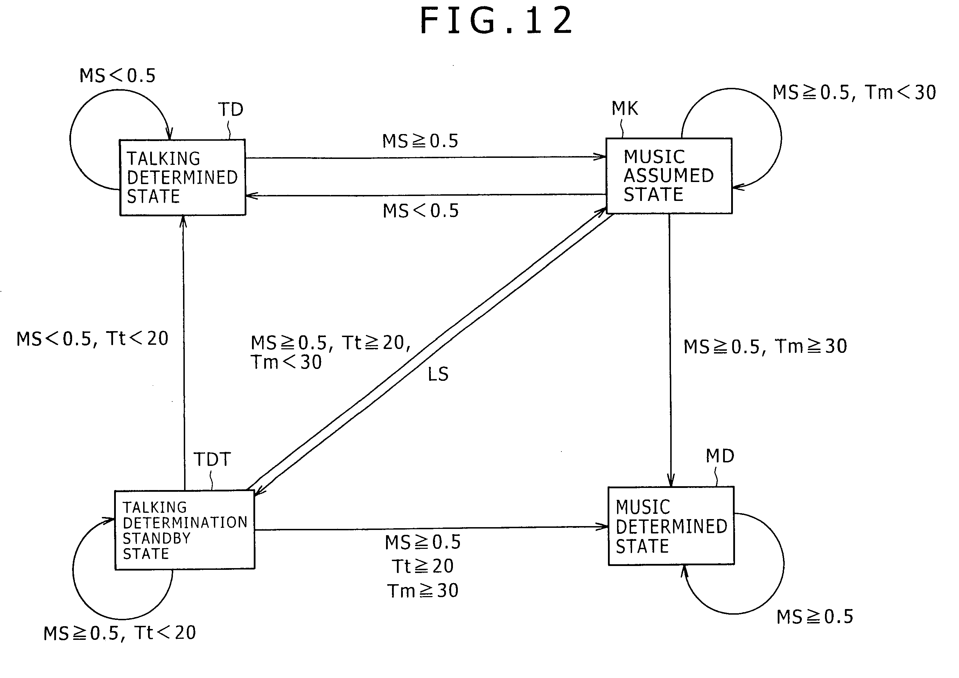

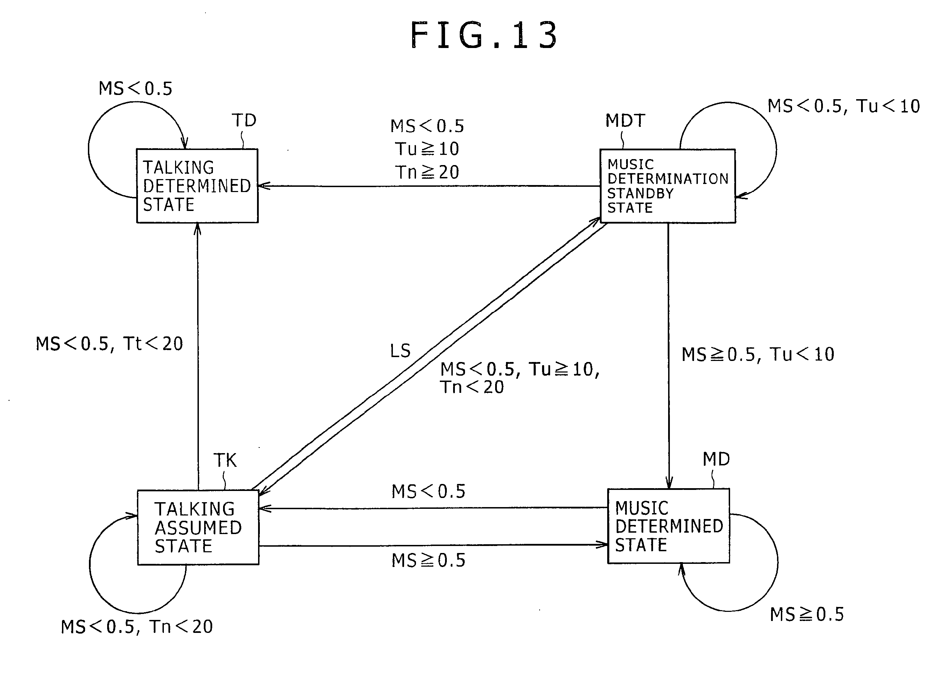

Next, in the case of the third section identifying method, as shown in FIG. 12 and FIG. 13, the inside of the section identifying control unit 31 can assume two new processing states in addition to the four processing states (the talking determined state TD, the talking assumed state TK, the music determined state MD, and the music assumed state MK) of the first section identifying method described above. In one state, it is assumed that when a silence section LS is detected in the music assumed state MK, there is a possibility that the musical piece likelihood MS will hereafter change back to become lower than the determination threshold value (that is, there is a possibility of a silence part inserted during talking in a radio program being detected). The one state is thus a temporary state (this state will hereinafter be referred to as a talking determination standby state) TDT to which a transition is made, as a preliminary stage for returning from the music assumed state MK to the talking determined state TD (FIG. 12). In the other state, it is assumed that when a silence section LS is detected in the talking assumed state TK, there is a possibility that the musical piece likelihood MS will hereafter change back to become equal to or higher than the determination threshold value (that is, there is a possibility of a silence part inserted during music in the radio program being detected). The other state is thus a temporary state (this state will hereinafter be referred to as a music determination standby state) MDT to which a transition is made, as a preliminary stage for returning from the talking assumed state TK to the music determined state MD (FIG. 13).

Thus, when detecting the silence section LS in the music assumed state MK or detecting the silence section LS in the talking assumed state TK, the section identifying control unit 31 can determine whether or not the detected silence section LS is inserted as a part of a music part section or a talking part section of program data. In the following, description will be made separately of a case where the silence section LS is detected in the music assumed state MK (FIG. 12) and a case where the silence section LS is detected in the talking assumed state TK (FIG. 13).

(1-6-1) Case of Detecting Silence Section in Music Assumed State

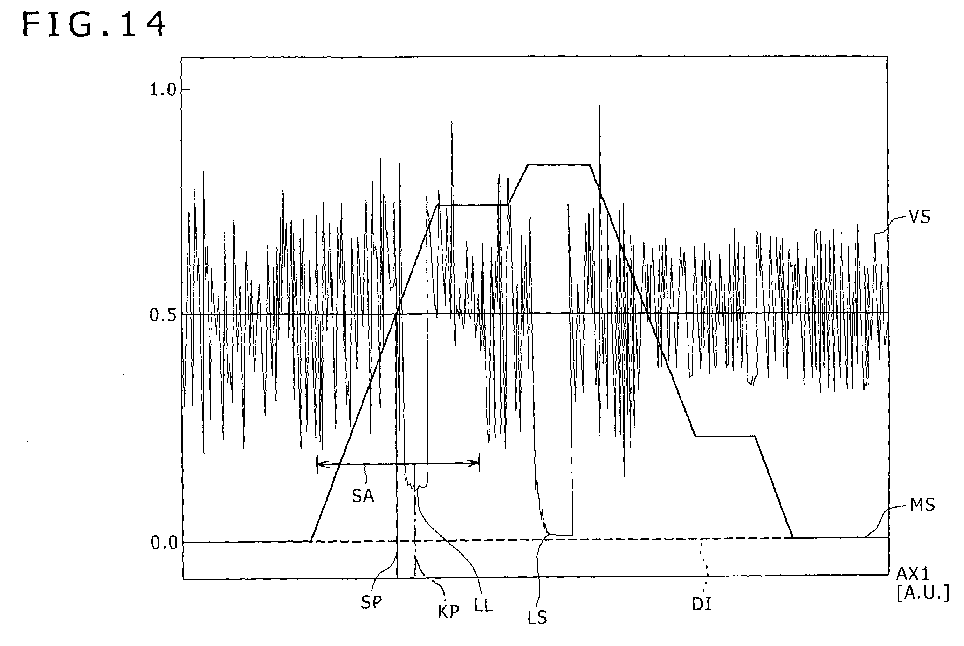

First, when the section identifying control unit 31 is supplied with the musical piece likelihood MS and the silence section LS as shown in FIG. 14, for example, the section identifying control unit 31 starts the first range detection and section identification process. When the processing state of the section identifying control unit 31 in the first range detection and section identification process is the music assumed state MK, and when the section identifying control unit 31 detects the silence section LS by the sound volume level analysis processing unit 34, there is a possibility of a silence part inserted during talking in the radio program being detected, and accordingly the section identifying control unit 31 starts a first silence section determination process for determining whether the detected silence section LS is a part of the talking part section of the program data.

Starting the first silence section determination process, the section identifying control unit 31 changes the processing state from the music assumed state MK to the talking determination standby state TDT. At this time, the section identifying control unit 31 continues clocking a music assumption continuation time Tm, which clocking has been performed in the music assumed state MK. The section identifying control unit 31 monitors to determine whether the numerical value of the musical piece likelihood MS sent from the musical piece likelihood analysis processing unit 33 changes to become lower than the determination threshold value during a predetermined determination time (this determination time will hereinafter be referred to as a third standby determination time) in the talking determination standby state TDT. This third standby determination time is set shorter than the music assumption determination time (30 seconds) in the music assumed state MK (for example 20 seconds in this case) because the talking determination standby state TDT is a state to which a transition is made so as to suspend the music assumed state MK temporarily.

The section identifying control unit 31 in the talking determination standby state TDT clocks a time (this time will hereinafter be referred to as a talking determination standby time) Tt during which the talking determination standby state TDT is continued. When the numerical value of new musical piece likelihood MS sent from the musical piece likelihood analysis processing unit 33 becomes lower than the determination threshold value before the talking determination standby time Tt becomes the third standby determination time or more, the section identifying control unit 31 determines that the silence section LS has simply been detected according to presence of silence during talking in the radio program, for example. The section identifying control unit 31 thus changes the processing state from the talking determination standby state TDT to the talking determined state TD. When the musical piece likelihood MS equal to or higher than the determination threshold value continues being supplied from the musical piece likelihood analysis processing unit 33 before the talking determination standby time Tt changes to be the third standby determination time or more in the talking determination standby state TDT, the section identifying control unit 31 reserves determination and continues the talking determination standby state TDT. When the talking determination standby time Tt is the third standby determination time or more, the music assumption continuation time Tm clocked from a start of the music assumed state MK is the music assumption determination time or more, and the musical piece likelihood MS equal to or higher than the determination threshold value continues being supplied from the musical piece likelihood analysis processing unit 33 to the section identifying control unit 31 in the talking determination standby state TDT, the section identifying control unit 31 determines that talking is ended and music starts to be aired in the radio program. The section identifying control unit 31 thus identifies the section change candidate position KP as a section boundary, identifies a side preceding the section boundary in time series in the program data as the talking part section, and identifies a side succeeding the section boundary in time series in the program data as the music part section. The section identifying control unit 31 then changes the processing state from the talking determination standby state TDT to the music determined state MD. On the other hand, when the talking determination standby time Tt is the third standby determination time or more, the music assumption continuation time Tm clocked from the start of the music assumed state MK is less than the music assumption determination time, and the musical piece likelihood MS equal to or higher than the determination threshold value continues being supplied from the musical piece likelihood analysis processing unit 33 to the section identifying control unit 31 in the talking determination standby state TDT, the section identifying control unit 31 determines that there is a possibility of talking being ended and music starting to be aired in the radio program. The section identifying control unit 31 thus changes the processing state from the talking determination standby state TDT to the music assumed state MK.

Then, at the time of the first silence section determination process, after changing the processing state to the music assumed state MK, the section identifying control unit 31 performs the same process as the above-described first range detection and section identification process, and thereby identifies the talking part section and the music part section of the program data. The section identifying control unit 31 then changes the processing state from the music assumed state MK to the music determined state MD, and ends the first silence section determination process. In addition, the section identifying control unit 31 generates section identifying information DI as a result of identifying the sections, and then sends the section identifying information DI to the dividing unit 21 via the output processing unit 35.

Thus, at the time of the first silence section determination process, the section identifying control unit 31 determines that the detected silence section LS is inserted as a part of talking in the radio program when the musical piece likelihood MS changes to become lower than the determination threshold value in the talking determination standby state TDT. Therefore, when a silence part is inserted during talking in the radio program, for example, the section identifying control unit 31 can continue processing without being misled by the inserted silence part, and properly identify the music part section and the talking part section of the program data. On the other hand, at the time of the first silence section determination process, when the musical piece likelihood MS does not become lower than the determination threshold value in the talking determination standby state TDT, the section identifying control unit 31 ignores the detected silence section LS, and continues processing as in the above-described first range detection and section identification process. The section identifying control unit 31 can thereby identify the talking part section and the music part section of the program data.

(1-6-2) Case of Detecting Silence Section in Talking Assumed State

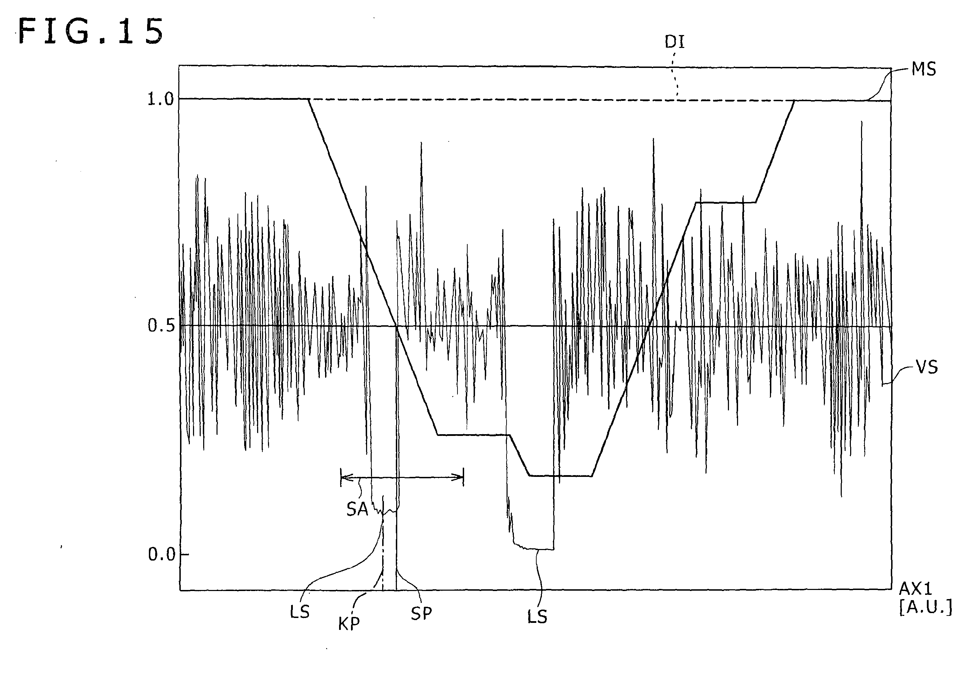

Next, when the section identifying control unit 31 is supplied with the musical piece likelihood MS and the silence section LS as shown in FIG. 15, for example, the section identifying control unit 31 starts the second range detection and section identification process. When the processing state of the section identifying control unit 31 in the second range detection and section identification process is the talking assumed state TK, and when the section identifying control unit 31 detects the silence section LS by the sound volume level analysis processing unit 34, there is a possibility of a silence part inserted during music in the radio program being detected, and accordingly the section identifying control unit 31 starts a second silence section determination process for determining whether the detected silence section LS is a part of the music part section of the program data.

Starting the second silence section determination process, the section identifying control unit 31 changes the processing state from the talking assumed state TK to the music determination standby state MDT. At this time, the section identifying control unit 31 continues clocking a talking assumption continuation time Tn, which clocking has been performed in the talking assumed state TK. The section identifying control unit 31 monitors to determine whether the numerical value of the musical piece likelihood MS sent from the musical piece likelihood analysis processing unit 33 becomes equal to or higher than the determination threshold value during a predetermined determination time (this determination time will hereinafter be referred to as a fourth standby determination time) in the music determination standby state MDT. This fourth standby determination time is set shorter than the talking assumption determination time (20 seconds) in the talking assumed state TK (for example 10 seconds in this case) because the music determination standby state MDT is a state to which a transition is made so as to suspend the talking assumed state TK temporarily.

The section identifying control unit 31 in the music determination standby state MDT clocks a time (this time will hereinafter be referred to as a music determination standby time) Tu during which the music determination standby state MDT is continued. When the numerical value of new musical piece likelihood MS sent from the musical piece likelihood analysis processing unit 33 becomes equal to or higher than the determination threshold value before the music determination standby time Tu becomes the fourth standby determination time or more, the section identifying control unit 31 determines that the silence section LS has simply been detected according to presence of silence as a part of a musical piece during the music in the radio program, for example. The section identifying control unit 31 thus changes the processing state from the music determination standby state MDT to the music determined state MD. When the musical piece likelihood MS lower than the determination threshold value continues being supplied from the musical piece likelihood analysis processing unit 33 before the music determination standby time Tu changes to be the fourth standby determination time or more in the music determination standby state MDT, the section identifying control unit 31 reserves determination and continues the music determination standby state MDT. When the music determination standby time Tu is the fourth standby determination time or more, the talking assumption continuation time Tn clocked from a start of the talking assumed state TK is the talking assumption determination time or more, and the musical piece likelihood MS lower than the determination threshold value continues being supplied from the musical piece likelihood analysis processing unit 33 to the section identifying control unit 31 in the music determination standby state MDT, the section identifying control unit 31 determines that music is ended temporarily and talking starts to be aired in the radio program. The section identifying control unit 31 thus identifies the section change candidate position KP as a section boundary, identifies a side preceding the section boundary in time series in the program data as the music part section, and identifies a side succeeding the section boundary in time series in the program data as the talking part section. The section identifying control unit 31 then changes the processing state from the music determination standby state MDT to the talking determined state TD. On the other hand, when the music determination standby time Tu is the fourth standby determination time or more, the talking assumption continuation time Tn clocked from the start of the talking assumed state TK is less than the talking assumption determination time, and the musical piece likelihood MS lower than the determination threshold value continues being supplied from the musical piece likelihood analysis processing unit 33 to the section identifying control unit 31 in the music determination standby state MDT, the section identifying control unit 31 determines that there is a possibility of music being ended temporarily and talking starting to be aired in the radio program. The section identifying control unit 31 thus changes the processing state from the music determination standby state MDT to the talking assumed state TK.

Then, at the time of the second silence section determination process, after changing the processing state to the talking assumed state TK, the section identifying control unit 31 performs the same process as the above-described second range detection and section identification process, and thereby identifies the music part section and the talking part section of the program data. The section identifying control unit 31 then changes the processing state from the talking assumed state TK to the talking determined state TD, and ends the second silence section determination process. In addition, the section identifying control unit 31 generates section identifying information DI as a result of identifying the sections, and then sends the section identifying information DI to the dividing unit 21 via the output processing unit 35.

Thus, at the time of the second silence section determination process, the section identifying control unit 31 determines that the detected silence section LS is inserted as a part of music in the radio program when the musical piece likelihood MS changes to become equal to or higher than the determination threshold value in the music determination standby state MDT. Therefore, when a silence part is inserted in music (that is, in a musical piece) in the radio program, for example, the section identifying control unit 31 can continue processing without being misled by the inserted silence part, and properly identify the music part section and the talking part section of the program data. On the other hand, at the time of the second silence section determination process, when the musical piece likelihood MS does not become equal to or higher than the determination threshold value in the music determination standby state MDT, the section identifying control unit 31 ignores the detected silence section LS, and continues processing as in the above-described second range detection and section identification process. The section identifying control unit 31 can thereby identify the talking part section and the music part section of the program data.

(1-7) Prevention of Erroneous Detection of Relatively Long Silence Section

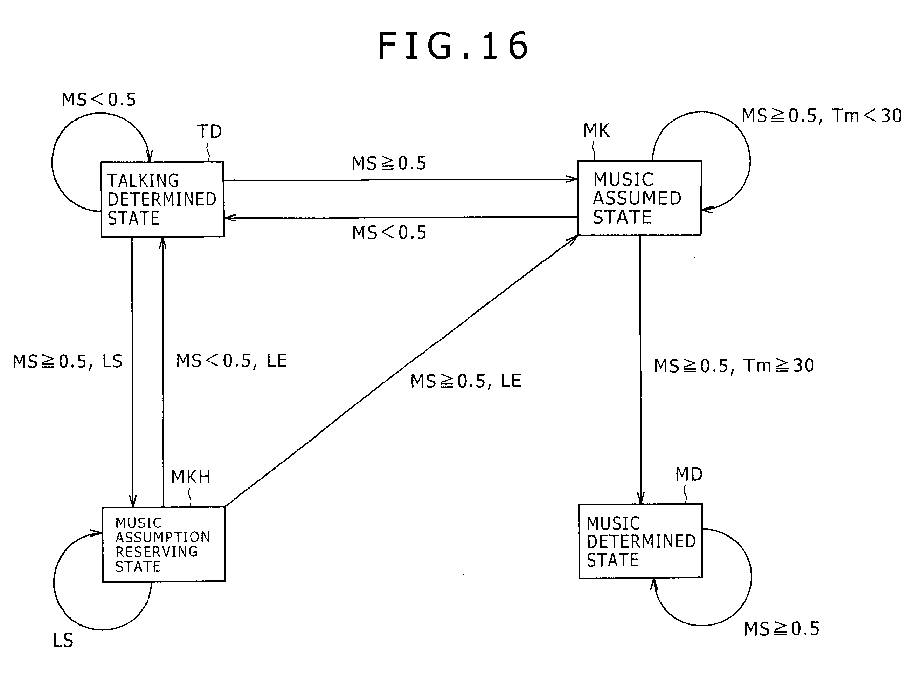

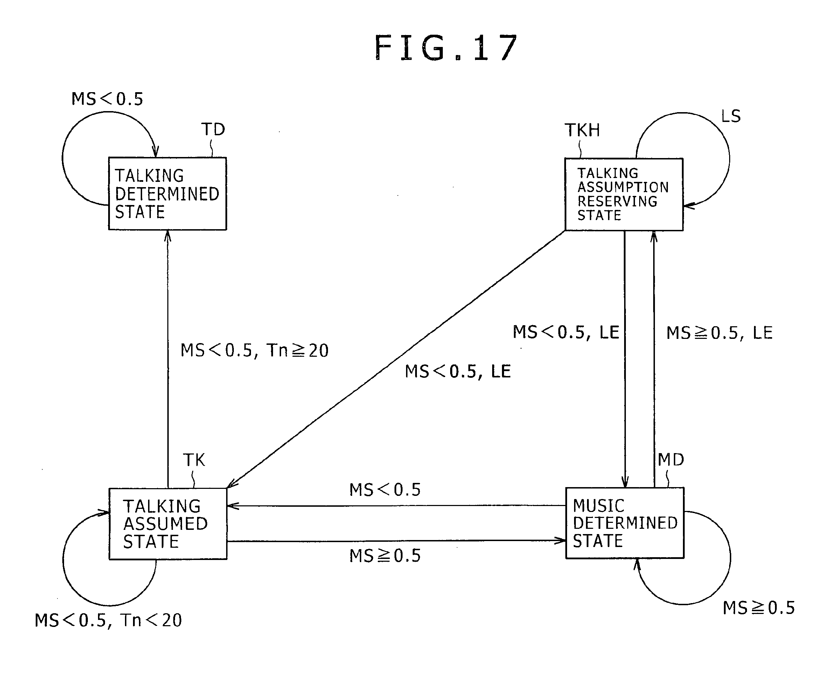

Next, in the case of the fourth section identifying method, as shown in FIG. 16 and FIG. 17, the inside of the section identifying control unit 31 can assume two new processing states in addition to the four processing states (the talking determined state TD, the talking assumed state TK, the music determined state MD, and the music assumed state MK) of the first section identifying method described above. In one state, it is assumed that when the musical piece likelihood MS changes to become equal to or higher than the determination threshold value while a silence section LS is detected in the talking determined state TD, it is not known when silence changes to sound (that is, there is a possibility of a time being taken before music starts to be aired in a radio program). The one state is thus a temporary state (this state will hereinafter be referred to as a music assumption reserving state) MKH in which a transition from the talking determined state TD to the music assumed state MK is temporarily reserved (FIG. 16). In the other state, it is assumed that when the musical piece likelihood MS changes to become lower than the determination threshold value while a silence section LS is detected in the music determined state MD, it is not known when silence changes to sound (that is, there is a possibility of a time being taken before talking starts to be aired in the radio program). The other state is thus a temporary state (this state will hereinafter be referred to as a talking assumption reserving state) TKH in which a transition from the music determined state MD to the talking assumed state TK is temporarily reserved (FIG. 17).

Thus, when the section identifying control unit 31 makes a transition from the talking determined state TD to the music assumed state MK, or makes a transition from the music determined state MD to the talking assumed state TK, and the section identifying control unit 31 also detects a silence section LS in parallel, the section identifying control unit 31 can reserve the transition to the talking assumed state TK or the music assumed state MK until the detected silence section LS is ended and a sound section (that is, a music part section or a talking part section) is started. In the following, description will be made separately of a case where the musical piece likelihood MS equal to or higher than the determination threshold value and the silence section LS are detected in parallel with each other in the talking determined state TD (FIG. 16) and a case where the musical piece likelihood MS lower than the determination threshold value and the silence section LS are detected in parallel with each other in the music determined state MD (FIG. 17).

(1-7-1) Case of Detecting Musical Piece Likelihood Equal to or Higher than Determination Threshold Value and Silence Section in Talking Determined State

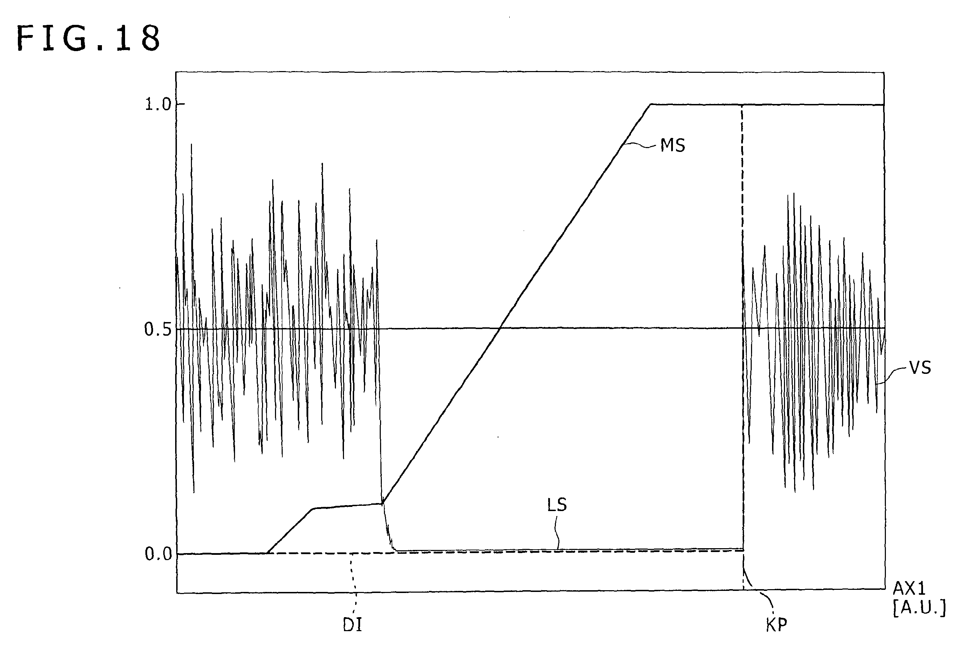

First, as shown in FIG. 18, for example, when musical piece likelihood MS lower than the determination threshold value is sent from the musical piece likelihood analysis processing unit 33 to the section identifying control unit 31, the section identifying control unit 31 determines that the musical piece likelihood MS indicates talking in a radio program. The section identifying control unit 31 changes the processing state to the talking determined state TD, and continues the talking determined state TD as long as the musical piece likelihood MS newly sent from the musical piece likelihood analysis processing unit 33 is lower than the determination threshold value. When the section identifying control unit 31 detects that the musical piece likelihood MS changes to become equal to or higher than the determination threshold value while detecting a silence section LS by the sound volume level analysis processing unit 34 in the talking determined state TD, there is a possibility of a time being taken before music is aired in the radio program, and accordingly the section identifying control unit 31 starts a first state transition reserving process for reserving a transition to the music assumed state MK until the detected silence section LS is ended.

Starting the first state transition reserving process, the section identifying control unit 31 changes the processing state from the talking determined state TD to the music assumption reserving state MKH. The section identifying control unit 31 in the music assumption reserving state MKH waits for the sound volume level VS to rise from a silence level to a sound level. While the silence section LS is continued, the section identifying control unit 31 maintains the music assumption reserving state MKH. Then, when the section identifying control unit 31 in the music assumption reserving state MKH detects that the sound volume level VS rises to a sound level, and the musical piece likelihood MS immediately after the detection of the rising edge of the sound level is lower than the determination threshold value, the section identifying control unit 31 determines that there is simply silence during talking (for example no voice sound during talking) in the radio program, for example. The section identifying control unit 31 thus makes a transition so as to return the processing state from the music assumption reserving state MKH to the talking determined state TD. On the other hand, when the section identifying control unit 31 in the music assumption reserving state MKH detects that the sound volume level VS rises to a sound level, and the musical piece likelihood MS immediately after the detection of the rising edge of the sound level is equal to or higher than the determination threshold value, the section identifying control unit 31 determines that there is a possibility of music starting after silence in the radio program. The section identifying control unit 31 detects a position (this position will hereinafter be referred to as a sound rising edge position) LE at which the sound volume level VS rises from the silence level of the silence section LS to the sound level, and stores the sound rising edge position LE as a section boundary candidate position KP. The section identifying control unit 31 changes the processing state from the music assumption reserving state MKH to the music assumed state MK.

Then, at the time of the first state transition reserving process, after changing the processing state to the music assumed state MK, the section identifying control unit 31 performs the same process as the above-described first range detection and section identification process, and thereby identifies the talking part section and the music part section of the program data. The section identifying control unit 31 then changes the processing state from the music assumed state MK to the music determined state MD, and ends the first state transition reserving process. In addition, the section identifying control unit 31 generates section identifying information DI as a result of identifying the sections, and then sends the section identifying information DI to the dividing unit 21 via the output processing unit 35.

Thus, at the time of the first state transition reserving process, the section identifying control unit 31 reserves the transition to the music assumed state MK or the talking determined state TD until the section identifying control unit 31 detects the sound rising edge position LE in the music assumption reserving state MKH. Therefore, when a relatively long silence part is inserted between talking and music in the radio program, for example, the section identifying control unit 31 can avoid changing the processing state from the talking determined state TD to the music assumed state MK even when the silence section LS is detected according to the musical piece likelihood MS whose value rises to the determination threshold value or higher at the time of the silence part depending on a setting, and consequently erroneously identifying the silence section LS as the music part section of the program data.

(1-7-2) Case of Detecting Musical Piece Likelihood Lower than Determination Threshold Value and Silence Section in Music Determined State

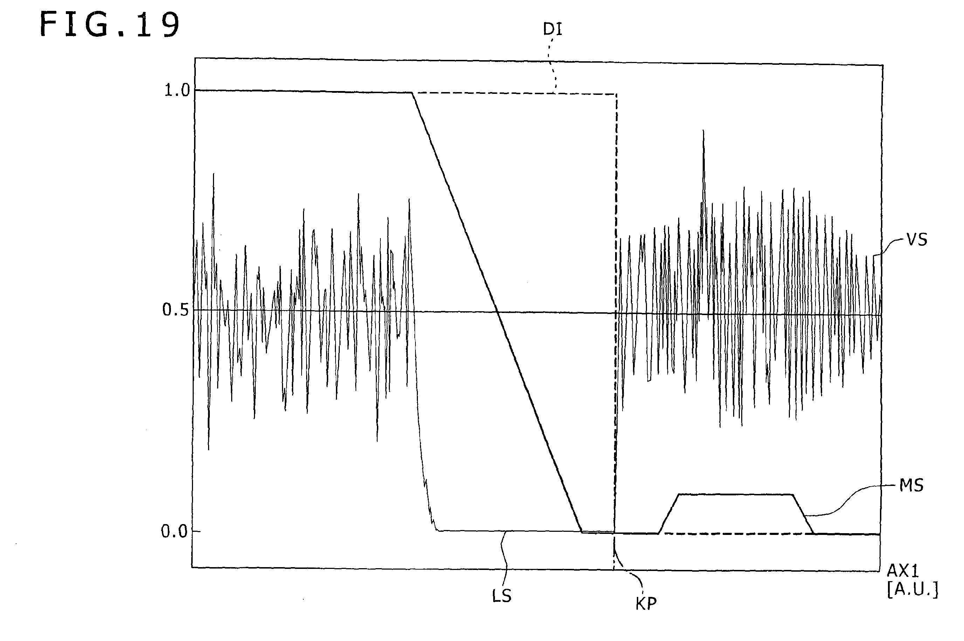

Next, as shown in FIG. 19, for example, when musical piece likelihood MS equal to or higher than the determination threshold value is sent from the musical piece likelihood analysis processing unit 33 to the section identifying control unit 31, the section identifying control unit 31 determines that the musical piece likelihood MS indicates music in a radio program. The section identifying control unit 31 changes the processing state to the music determined state MD, and continues the music determined state MD as long as the musical piece likelihood MS newly sent from the musical piece likelihood analysis processing unit 33 is equal to or higher than the determination threshold value. When the section identifying control unit 31 detects that the musical piece likelihood MS becomes lower than the determination threshold value while detecting a silence section LS by the sound volume level analysis processing unit 34 in the music determined state MD, there is a possibility of a time being taken before talking is started in the radio program, and accordingly the section identifying control unit 31 starts a second state transition reserving process for reserving a transition to the talking assumed state TK until the detected silence section LS is ended.

Starting the second state transition reserving process, the section identifying control unit 31 changes the processing state from the music determined state MD to the talking assumption reserving state TKH. The section identifying control unit 31 in the talking assumption reserving state TKH waits for the sound volume level VS to rise from a silence level to a sound level. While the silence section LS is continued, the section identifying control unit 31 maintains the talking assumption reserving state TKH. Then, when the section identifying control unit 31 in the talking assumption reserving state TKH detects that the sound volume level VS rises to a sound level, and the musical piece likelihood MS immediately after the detection of the rising edge of the sound level is equal to or higher than the determination threshold value, the section identifying control unit 31 determines that a silence part is simply inserted during music in the radio program, for example. The section identifying control unit 31 thus makes a transition so as to return the processing state from the talking assumption reserving state TKH to the music determined state MD. On the other hand, when the section identifying control unit 31 in the talking assumption reserving state TKH detects that the sound volume level VS rises to a sound level, and the musical piece likelihood MS immediately after the detection of the rising edge of the sound level is lower than the determination threshold value, the section identifying control unit 31 determines that there is a possibility of talking starting after silence in the radio program. The section identifying control unit 31 stores a sound rising edge position LE at which the sound volume level VS rises from the silence level of the silence section LS to the sound level as a section boundary candidate position KP. The section identifying control unit 31 changes the processing state from the talking assumption reserving state TKH to the talking assumed state TK.

Then, at the time of the second state transition reserving process, after changing the processing state to the talking assumed state TK, the section identifying control unit 31 performs the same process as the above-described second range detection and section identification process, and thereby identifies the music part section and the talking part section of the program data. The section identifying control unit 31 then changes the processing state from the talking assumed state TK to the talking determined state TD, and ends the second state transition reserving process. In addition, the section identifying control unit 31 generates section identifying information DI as a result of identifying the sections, and then sends the section identifying information DI to the dividing unit 21 via the output processing unit 35.

Thus, at the time of the second state transition reserving process, the section identifying control unit 31 reserves the transition to the talking assumed state TK or the music determined state MD until the section identifying control unit 31 detects the sound rising edge position LE in the talking assumption reserving state TKH. Therefore, when a relatively long silence part is inserted between music and talking in the radio program, for example, the section identifying control unit 31 can avoid changing the processing state from the music determined state MD to the talking assumed state TK even when the silence section LS is detected according to the musical piece likelihood MS, whose value becomes lower than the determination threshold value at the time of the silence part depending on a setting, and consequently erroneously identifying the silence section LS as the talking part section of the program data.

(1-8) Description of Process Procedure

(1-8-1) First Range Detection and Section Identification Process Procedure

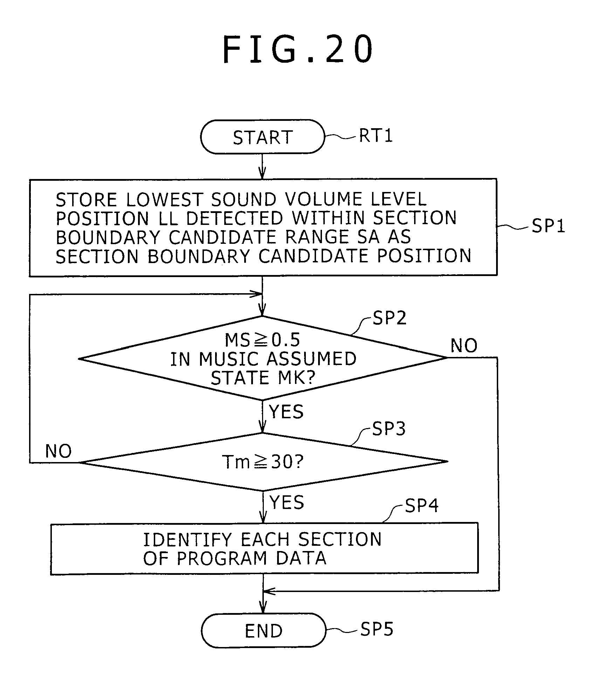

The procedure of the above-described first range detection and section identification process will be described in the following. When the musical piece likelihood MS changes to become equal to or higher than the determination threshold value in the talking determined state TD, the data recording device 10 starts a first range detection and section identification process procedure RT1 as represented in FIG. 20. After the section identifying control unit 31 in the section identifying unit 20 of the data recording device 10 starts the first range detection and section identification process procedure RT1, the section identifying control unit 31 in step SP1 detects a section boundary candidate range SA with a reference position where the musical piece likelihood MS overpasses the determination threshold value in program data as a center, and stores a lowest sound volume level position LL detected within the section boundary candidate range SA as a section boundary candidate position KP. Then, the section identifying control unit 31 changes the processing state from the talking determined state TD to the music assumed state MK, and proceeds to next step SP2.

In step SP2, the section identifying control unit 31 determines whether the musical piece likelihood MS continues being equal to or higher than the determination threshold value in the music assumed state MK. When a positive result is obtained in step SP2, this indicates that there is a strong possibility of talking being ended and music being started in the radio program. The section identifying control unit 31 therefore proceeds to next step SP3.

In step SP3, the section identifying control unit 31 determines whether or not the music assumption continuation time Tm from the transition to the music assumed state MK is the music assumption determination time or more. When a negative result is obtained in step SP3, this indicates that a time necessary to determine whether talking is ended and music is started in the radio program has not elapsed. The section identifying control unit 31 therefore returns to step SP2.

On the other hand, when a positive result is obtained in step SP3, this indicates that talking is ended and music is started in the radio program. The section identifying control unit 31 therefore proceeds to next step SP4.

In step SP4, the section identifying control unit 31 identifies the section change candidate position KP as a section boundary, identifies a side preceding the section boundary in time series in the program data as a talking part section, and identifies a side succeeding the section boundary in time series in the program data as a music part section. Then, the section identifying control unit 31 changes the processing state from the music assumed state MK to the music determined state MD, and proceeds to step SP5.

On the other hand, when a negative result is obtained in step SP2, this indicates that a bell sound or a part of music is simply inserted for a short time during talking in the radio program. Therefore, the section identifying control unit 31 returns the processing state from the music assumed state MK to the talking determined state TD, and proceeds to step SP5. The first range detection and section identification process procedure RT1 is thereby ended.

By the first range detection and section identification process procedure RT1, the data recording device 10 distinguishes talking and music in the radio program from each other.

(1-8-2) Second Range Detection and Section Identification Process Procedure

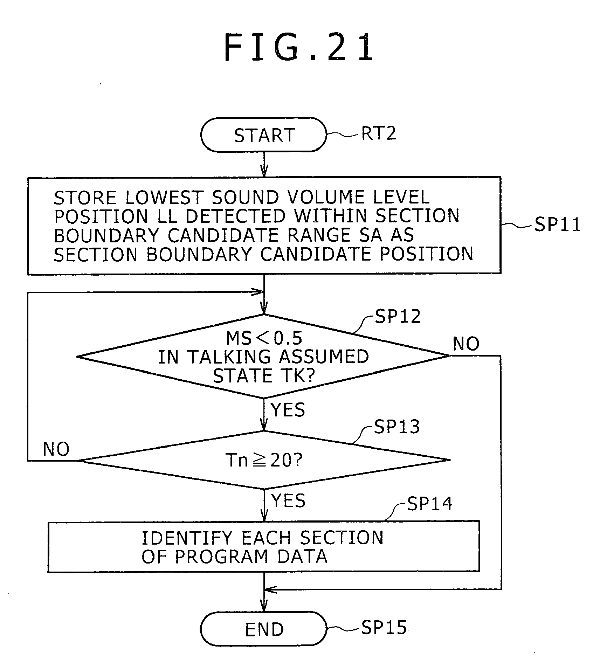

Description will next be made of the procedure of the above-described second range detection and section identification process. When the musical piece likelihood MS changes to become lower than the determination threshold value in the music determined state MD, the data recording device 10 starts a second range detection and section identification process procedure RT2 as represented in FIG. 21. After the section identifying control unit 31 in the section identifying unit 20 of the data recording device 10 starts the second range detection and section identification process procedure RT2, the section identifying control unit 31 in step SP11 detects a section boundary candidate range SA with a reference position where the musical piece likelihood MS becomes lower than the determination threshold value as a center, and stores a lowest sound volume level position LL detected within the section boundary candidate range SA as a section boundary candidate position KP. Then, the section identifying control unit 31 makes a transition from the music determined state MD to the talking assumed state TK, and proceeds to next step SP12.

In step SP12, the section identifying control unit 31 determines whether the musical piece likelihood MS continues being lower than the determination threshold value in the talking assumed state TK. When a positive result is obtained in step SP12, this indicates that there is a strong possibility of music being ended and talking being started in the radio program. The section identifying control unit 31 therefore proceeds to next step SP13.

In step SP13, the section identifying control unit 31 determines whether or not the talking assumption continuation time Tn from the transition to the talking assumed state TK is the talking assumption determination time or more. When a negative result is obtained in step SP13, this indicates that a time necessary to determine whether music is ended and talking is started in the radio program has not elapsed. The section identifying control unit 31 therefore returns to step SP12.

On the other hand, when a positive result is obtained in step SP13, this indicates that music is ended and talking is started in the radio program. The section identifying control unit 31 therefore proceeds to next step SP14.

In step SP14, the section identifying control unit 31 identifies the section change candidate position KP as a section boundary, identifies a side preceding the section boundary in time series in program data as a music part section, and identifies a side succeeding the section boundary in time series in the program data as a talking part section. Then, the section identifying control unit 31 changes the processing state from the talking assumed state TK to the talking determined state TD, and proceeds to step SP15.

On the other hand, when a negative result is obtained in step SP12, this indicates that speech of a singer is simply inserted for a short time during music in the radio program. Therefore, the section identifying control unit 31 returns the processing state from the talking assumed state TK to the music determined state MD, and proceeds to step SP15. The second range detection and section identification process procedure RT2 is thereby ended.

By the second range detection and section identification process procedure RT2, the data recording device 10 distinguishes music and talking in the radio program from each other.

(1-8-3) First Silence Detection and Section Identification Process Procedure

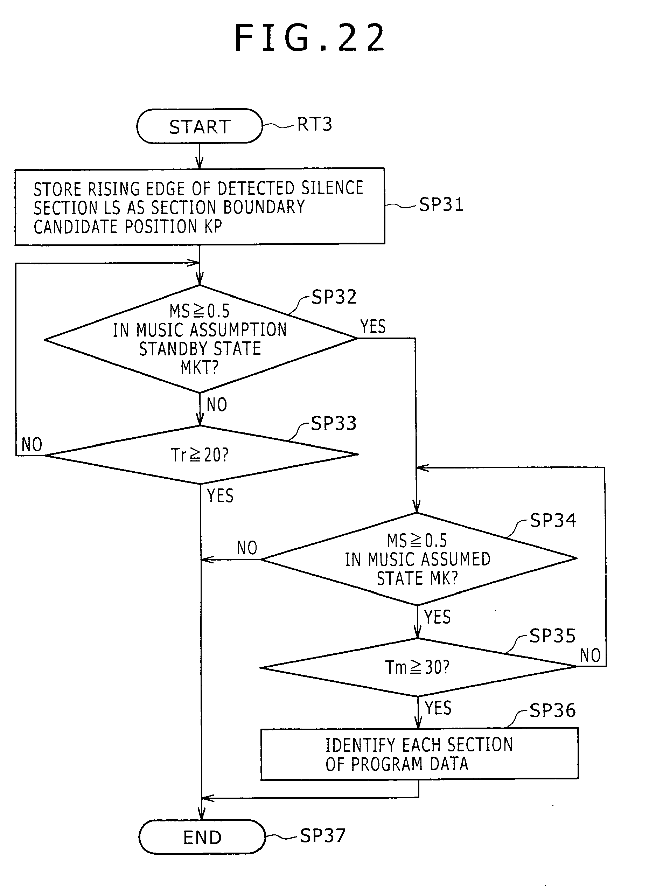

The procedure of the above-described first silence detection and section identification process will next be described. When the data recording device 10 detects a silence section LS in the talking determined state TD, the data recording device 10 starts a first silence detection and section identification process procedure RT3 as represented in FIG. 22. After the section identifying control unit 31 in the section identifying unit 20 of the data recording device 10 starts the first silence detection and section identification process procedure RT3, the section identifying control unit 31 in step SP31 stores a sound rising edge position LE at which the sound volume level VS rises to a sound level in the silence section LS as a section boundary candidate position KP. Then, the section identifying control unit 31 changes the processing state from the talking determined state TD to the music assumption standby state MKT, and proceeds to next step SP32.

In step SP32, the section identifying control unit 31 determines whether the musical piece likelihood MS becomes equal to or higher than the determination threshold value in the music assumption standby state MKT. When a negative result is obtained in step SP32, this indicates that it is not yet known whether talking is ended and music is started in the radio program. The section identifying control unit 31 therefore proceeds to next step SP33.

In step SP33, the section identifying control unit 31 determines whether or not the music assumption standby time Tr from the transition to the music assumption standby state MKT is the first standby determination time or more. When a negative result is obtained in step SP33, this indicates that a time necessary to determine whether there is a possibility of talking being ended and music being started in the radio program has not elapsed. The section identifying control unit 31 therefore returns to step SP32.

On the other hand, when a positive result is obtained in step SP33, this indicates that silence during talking in the radio program is simply detected. Therefore, the section identifying control unit 31 returns the processing state from the music assumption standby state MKT to the talking determined state TD, and proceeds to step SP37.

On the other hand, when a positive result is obtained in step SP32, this indicates that there is a possibility of talking being ended and music being started in the radio program. Therefore, the section identifying control unit 31 returns the processing state from the music assumption standby state MKT to the music assumed state MK, and proceeds to step SP34.

In step SP34, the section identifying control unit 31 determines whether the musical piece likelihood MS continues being equal to or higher than the determination threshold value in the music assumed state MK. When a positive result is obtained in step SP34, this indicates that there is a strong possibility of talking being ended and music being started in the radio program. The section identifying control unit 31 therefore proceeds to next step SP35.

In step SP35, the section identifying control unit 31 determines whether or not the music assumption continuation time Tm from the transition to the music assumed state MK is the music assumption determination time or more. When a negative result is obtained in step SP35, this indicates that a time necessary to determine whether talking is ended and music is started in the radio program has not elapsed. The section identifying control unit 31 therefore returns to step SP34.

On the other hand, when a positive result is obtained in step SP35, this indicates that talking is ended and music is started in the radio program. The section identifying control unit 31 therefore proceeds to next step SP36.

In step SP36, the section identifying control unit 31 identifies the section change candidate position KP as a section boundary, identifies a side preceding the section boundary in time series in program data as a talking part section, and identifies a side succeeding the section boundary in time series in the program data as a music part section. Then, the section identifying control unit 31 changes the processing state from the music assumed state MK to the music determined state MD, and proceeds to step SP37.

On the other hand, when a negative result is obtained in step SP34, this indicates that a bell sound or a part of music is simply inserted for a short time during talking in the radio program. Therefore, the section identifying control unit 31 returns the processing state from the music assumed state MK to the talking determined state TD, and proceeds to step SP37. The first silence detection and section identification process procedure RT3 is thereby ended.

By the first silence detection and section identification process procedure RT3, the data recording device 10 distinguishes talking and music in the radio program from each other.

(1-8-4) Second Silence Detection and Section Identification Process Procedure

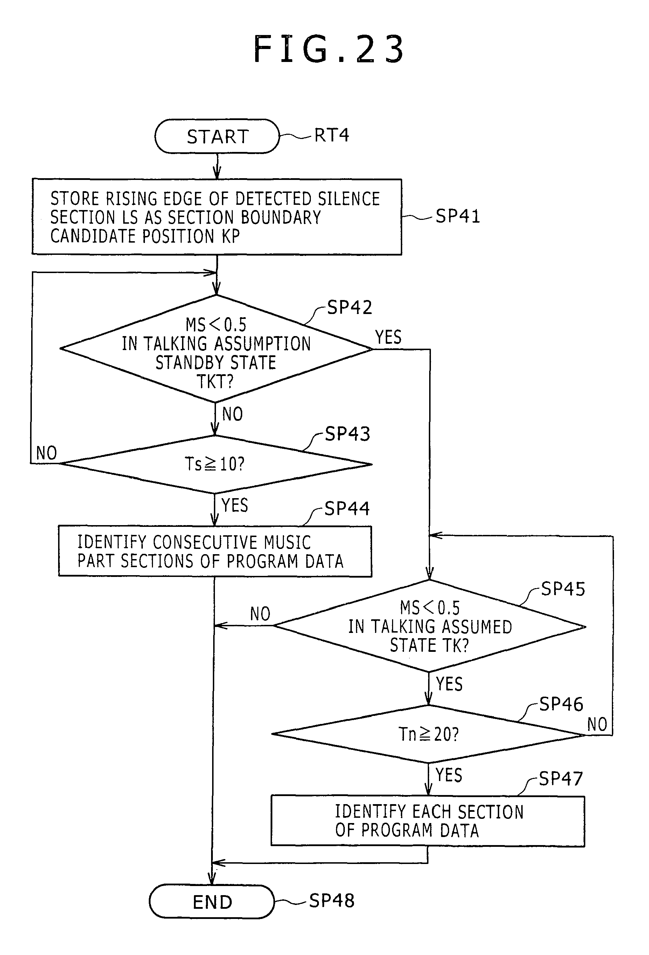

The procedure of the above-described second silence detection and section identification process will next be described. When the data recording device 10 detects a silence section LS in the music determined state MD, the data recording device 10 starts a second silence detection and section identification process procedure RT4 as represented in FIG. 23. After the section identifying control unit 31 in the section identifying unit 20 of the data recording device 10 starts the second silence detection and section identification process procedure RT4, the section identifying control unit 31 in step SP41 stores a sound rising edge position LE at which the sound volume level VS rises to a sound level in the silence section LS as a section boundary candidate position KP. Then, the section identifying control unit 31 changes the processing state from the music determined state MD to the talking assumption standby state TKT, and proceeds to next step SP42.

In step SP42, the section identifying control unit 31 determines whether the musical piece likelihood MS becomes lower than the determination threshold value in the talking assumption standby state TKT. When a negative result is obtained in step SP42, this indicates that it is not yet known whether music is ended and talking is started in the radio program. The section identifying control unit 31 therefore proceeds to next step SP43.

In step SP43, the section identifying control unit 31 determines whether or not the talking assumption standby time Ts from the transition to the talking assumption standby state TKT is the second standby determination time or more. When a negative result is obtained in step SP43, this indicates that a time necessary to determine whether there is a possibility of music being ended and talking being started in the radio program has not elapsed. The section identifying control unit 31 therefore returns to step SP42.

On the other hand, when a positive result is obtained in step SP43, this indicates that music in the radio program changes to a next piece of music with a silence part inserted between the pieces of music. Therefore, the section identifying control unit 31 proceeds to next step SP44.

In step SP44, the section identifying control unit 31 identifies the section change candidate position KP as a section boundary, and identifies a side preceding the section boundary and a side succeeding the section boundary in time series in program data as separate music part sections, respectively. Then, the section identifying control unit 31 changes the processing state from the talking assumption standby state TKT to the music determined state MD, and proceeds to step SP48.

On the other hand, when a positive result is obtained in step SP42, this indicates that there is a possibility of music being ended and talking being started in the radio program. Therefore, the section identifying control unit 31 changes the processing state from the talking assumption standby state TKT to the talking assumed state TK, and proceeds to step SP45.

In step SP45, the section identifying control unit 31 determines whether the musical piece likelihood MS continues being lower than the determination threshold value in the talking assumed state TK. When a positive result is obtained in step SP45, this indicates that there is a strong possibility of music being ended and talking being started in the radio program. The section identifying control unit 31 therefore proceeds to next step SP46.

In step SP46, the section identifying control unit 31 determines whether or not the talking assumption continuation time Tn from the transition to the talking assumed state TK is the talking assumption determination time or more. When a negative result is obtained in step SP46, this indicates that a time necessary to determine whether music is ended and talking is started in the radio program has not elapsed. The section identifying control unit 31 therefore returns to step SP45.

On the other hand, when a positive result is obtained in step SP46, this indicates that music is ended and talking is started in the radio program. The section identifying control unit 31 therefore proceeds to next step SP47.

In step SP47, the section identifying control unit 31 identifies the section change candidate position KP as a section boundary, identifies a side preceding the section boundary in time series in program data as a music part section, and identifies a side succeeding the section boundary in time series in the program data as a talking part section. Then, the section identifying control unit 31 changes the processing state from the talking assumed state TK to the talking determined state TD, and proceeds to step SP48.

On the other hand, when a negative result is obtained in step SP45, this indicates that speech of a singer is simply inserted for a short time during music in the radio program. Therefore, the section identifying control unit 31 returns the processing state from the talking assumed state TK to the music determined state MD, and proceeds to step SP48. The second silence detection and section identification process procedure RT4 is thereby ended.

By the second silence detection and section identification process procedure RT4, the data recording device 10 distinguishes music and talking in the radio program from each other.

(1-8-5) First Silence Section Determination Process Procedure

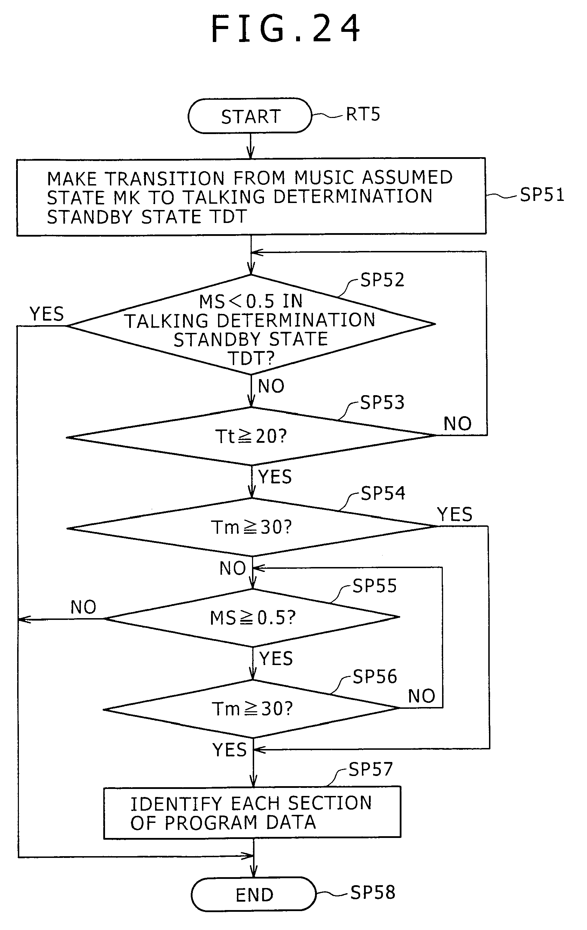

The procedure of the above-described first silence section determination process will next be described. When the data recording device 10 detects a silence section LS in the music assumed state MK, the data recording device 10 starts a first silence section determination process procedure RT5 as represented in FIG. 24. After the section identifying control unit 31 in the section identifying unit 20 of the data recording device 10 starts the first silence section determination process procedure RT5, the section identifying control unit 31 in step SP51 changes the processing state from the music assumed state MK to the talking determination standby state TDT. The section identifying control unit 31 then proceeds to next step SP52.

In step SP52, the section identifying control unit 31 determines whether the musical piece likelihood MS changes to become lower than the determination threshold value in the talking determination standby state TDT. When a positive result is obtained in step SP52, this indicates that a silence part inserted in talking in a radio program is detected. Therefore, the section identifying control unit 31 changes the processing state from the talking determination standby state TDT to the talking determined state TD, and proceeds to step SP58.

When a negative result is obtained in step SP52, on the other hand, this indicates that it is not yet known whether a silence part inserted in talking in the radio program is detected. The section identifying control unit 31 therefore proceeds to next step SP53.

In step SP53, the section identifying control unit 31 determines whether or not the talking determination standby time Tt from the transition to the talking determination standby state TDT is the third standby determination time or more. When a negative result is obtained in step SP53, this indicates that a time necessary to determine whether a silence part inserted in talking in the radio program is detected has not elapsed. The section identifying control unit 31 therefore returns to step SP52.

On the other hand, when a positive result is obtained in step SP53, this indicates that there is a possibility of talking being ended and music being started in the radio program irrespective of the detected silence section LS. Therefore, the section identifying control unit 31 proceeds to next step SP54.

In step SP54, the section identifying control unit 31 in the talking determination standby state TDT determines whether or not the music assumption continuation time Tm clocked from a start of the music assumed state MK is the music assumption determination time or more. When a negative result is obtained in step SP54, this indicates that a time necessary to determine whether talking is ended and music is started in the radio program has not elapsed. Therefore, the section identifying control unit 31 changes the processing state from the talking determination standby state TDT to the music assumed state MK, and proceeds to next step SP55.

In step SP55, the section identifying control unit 31 determines whether the musical piece likelihood MS continues being equal to or higher than the determination threshold value in the music assumed state MK. When a positive result is obtained in step SP55, this indicates that there is a strong possibility of talking being ended and music being started in the radio program. The section identifying control unit 31 therefore proceeds to next step SP56.

In step SP56, the section identifying control unit 31 determines whether or not the music assumption continuation time Tm from the transition to the music assumed state MK is the music assumption determination time or more. When a negative result is obtained in step SP56, this indicates that a time necessary to determine whether talking is ended and music is started in the radio program has not elapsed. The section identifying control unit 31 therefore returns to step SP55.

On the other hand, when a positive result is obtained in step SP56, this indicates that talking is ended and music is started in the radio program. The section identifying control unit 31 therefore proceeds to next step SP57.

On the other hand, when a negative result is obtained in step SP55, this indicates that a bell sound or a part of music is simply inserted for a short time during talking in the radio program. Therefore, the section identifying control unit 31 returns the processing state from the music assumed state MK to the talking determined state TD, and proceeds to step SP58.

When a positive result is obtained in step SP54, on the other hand, this indicates that talking is ended and music is started in the radio program. The section identifying control unit 31 therefore proceeds to next step SP57.

In step SP57, the section identifying control unit 31 identifies the section change candidate position KP as a section boundary, identifies a side preceding the section boundary in time series in program data as a talking part section, and identifies a side succeeding the section boundary in time series in the program data as a music part section. Then, the section identifying control unit 31 changes the processing state to the music determined state MD, and proceeds to step SP58. The first silence section determination process procedure RT5 is thereby ended.

By the first silence section determination process procedure RT5, the data recording device 10 distinguishes the talking including the silence part in the radio program as one significant unit of talking.

(1-8-6) Second Silence Section Determination Process Procedure

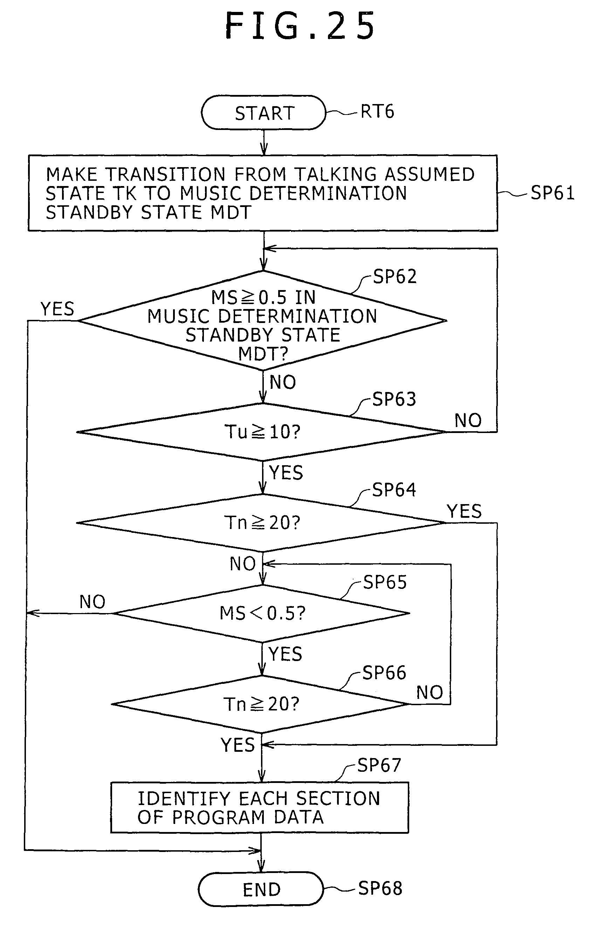

The procedure of the above-described second silence section determination process will next be described. When the data recording device 10 detects a silence section LS in the talking assumed state TK, the data recording device 10 starts a second silence section determination process procedure RT6 as represented in FIG. 25. After the section identifying control unit 31 in the section identifying unit 20 of the data recording device 10 starts the second silence section determination process procedure RT6, the section identifying control unit 31 in step SP61 changes the processing state from the talking assumed state TK to the music determination standby state MDT. The section identifying control unit 31 then proceeds to next step SP62.

In step SP62, the section identifying control unit 31 determines whether the musical piece likelihood MS changes to become equal to or higher than the determination threshold value in the music determination standby state MDT. When a positive result is obtained in step SP62, this indicates that a silence part as a part of a musical piece inserted in the music in a radio program is detected. Therefore, the section identifying control unit 31 changes the processing state from the music determination standby state MDT to the music determined state MD, and proceeds to step SP68.

When a negative result is obtained in step SP62, on the other hand, this indicates that it is not yet known whether a silence part inserted in music in the radio program is detected. The section identifying control unit 31 therefore proceeds to next step SP63.

In step SP63, the section identifying control unit 31 determines whether or not the music determination standby time Tu from the transition to the music determination standby state MDT is the fourth standby determination time or more. When a negative result is obtained in step SP63, this indicates that a time necessary to determine whether a silence part as a part of a musical piece inserted in the music in the radio program is detected has not elapsed. The section identifying control unit 31 therefore returns to step SP62.

On the other hand, when a positive result is obtained in step SP63, this indicates that there is a possibility of music being ended and talking being started in the radio program irrespective of the detected silence section LS. Therefore, the section identifying control unit 31 returns the processing state from the music determination standby state MDT to the talking assumed state TK, and proceeds to step SP64.

In step SP64, the section identifying control unit 31 in the music determination standby state MDT determines whether or not the talking assumption continuation time Tn clocked from a start of the talking assumed state TK is the talking assumption determination time or more. When a negative result is obtained in step SP64, this indicates that a time necessary to determine whether music is ended and talking is started in the radio program has not elapsed. Therefore, the section identifying control unit 31 changes the processing state from the music determination standby state MDT to the talking assumed state TK, and proceeds to next step SP65.

In step SP65, the section identifying control unit 31 determines whether the musical piece likelihood MS continues being lower than the determination threshold value in the talking assumed state TK. When a positive result is obtained in step SP65, this indicates that there is a strong possibility of music being ended and talking being started in the radio program. The section identifying control unit 31 therefore proceeds to next step SP66.

In step SP66, the section identifying control unit 31 determines whether or not the talking assumption continuation time Tn from the transition to the talking assumed state TK is the talking assumption determination time or more. When a negative result is obtained in step SP66, this indicates that a time necessary to determine whether music is ended and talking is started in the radio program has not elapsed. The section identifying control unit 31 therefore returns to step SP65.

On the other hand, when a positive result is obtained in step SP66, this indicates that music is ended and talking is started in the radio program. The section identifying control unit 31 therefore proceeds to next step SP67.

On the other hand, when a negative result is obtained in step SP65, this indicates that speech of a singer is simply inserted for a short time during music in the radio program. Therefore, the section identifying control unit 31 returns the processing state from the talking assumed state TK to the music determined state MD, and proceeds to step SP68.

When a positive result is obtained in step SP64, on the other hand, this indicates that music is ended and talking is started in the radio program. The section identifying control unit 31 therefore proceeds to next step SP67.

In step SP67, the section identifying control unit 31 identifies the section change candidate position KP as a section boundary, identifies a side preceding the section boundary in time series in program data as a music part section, and identifies a side succeeding the section boundary in time series in the program data as a talking part section. Then, the section identifying control unit 31 changes the processing state to the talking determined state TD, and proceeds to step SP68. The second silence section determination process procedure RT6 is thereby ended.

By the second silence section determination process procedure RT6, the data recording device 10 distinguishes the music including the silence part in the radio program as one significant piece of music.

(1-8-7) First State Transition Reserving Process Procedure

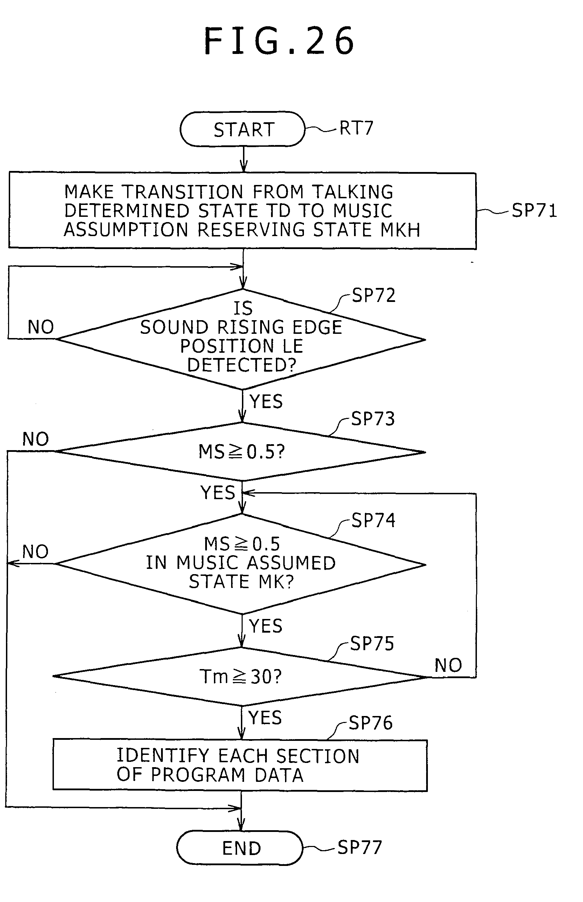

The procedure of the above-described first state transition reserving process will next be described. When the data recording device 10 detects that the musical piece likelihood MS changes to become equal to or higher than the determination threshold value while detecting a silence section LS in the talking determined state TD, the data recording device 10 starts a first state transition reserving process procedure RT7 as represented in FIG. 26. After the section identifying control unit 31 in the section identifying unit 20 of the data recording device 10 starts the first state transition reserving process procedure RT7, the section identifying control unit 31 in step SP71 changes the processing state from the talking determined state TD to the music assumption reserving state MKH. The section identifying control unit 31 then proceeds to next step SP72.

In step SP72, the section identifying control unit 31 determines whether the sound volume level VS has risen from a silence level to a sound level in the music assumption reserving state MKH. When a negative result is obtained in step SP72, this indicates that silence is still continued in a radio program. The section identifying control unit 31 therefore repeats step SP72 until the sound volume level VS of the radio program rises from a silence level to a sound level. When a positive result is obtained in step SP72, on the other hand, this indicates that either talking is resumed or music is started in the radio program. The section identifying control unit 31 therefore stores a sound rising edge position LE at which the sound volume level VS rises from a silence level to a sound level as a section boundary candidate position KP. The section identifying control unit 31 then proceeds to next step SP73.

In step SP73, the section identifying control unit 31 in the music assumption reserving state MKH determines whether the musical piece likelihood MS immediately after the detection of the rising edge of the sound level is equal to or higher than the determination threshold value. When a negative result is obtained in step SP73, this indicates that talking is resumed after a silence state in the radio program. The section identifying control unit 31 therefore proceeds to step SP77.

On the other hand, when a positive result is obtained in step SP73, this indicates that there is a possibility of talking being ended and music being started in the radio program. Therefore, the section identifying control unit 31 changes the processing state from the music assumption reserving state MKH to the music assumed state MK, and proceeds to step SP74.

In step SP74, the section identifying control unit 31 determines whether the musical piece likelihood MS continues being equal to or higher than the determination threshold value in the music assumed state MK. When a positive result is obtained in step SP74, this indicates that there is a strong possibility of talking being ended and music being started in the radio program. The section identifying control unit 31 therefore proceeds to next step SP75.

In step SP75, the section identifying control unit 31 determines whether or not the music assumption continuation time Tm is the music assumption determination time or more. When a negative result is obtained in step SP75, this indicates that a time necessary to determine whether talking is ended and music is started in the radio program has not elapsed. The section identifying control unit 31 therefore returns to step SP74.

On the other hand, when a positive result is obtained in step SP75, this indicates that talking is ended and music is started in the radio program. The section identifying control unit 31 therefore proceeds to next step SP76.

In step SP76, the section identifying control unit 31 identifies the section change candidate position KP as a section boundary, identifies a side preceding the section boundary in time series in program data as a talking part section, and identifies a side succeeding the section boundary in time series in the program data as a music part section. Then, the section identifying control unit 31 changes the processing state from the music assumed state MK to the music determined state MD, and proceeds to step SP77. The first state transition reserving process procedure RT7 is thereby ended.

By the first state transition reserving process procedure RT7, the data recording device 10 reserves processing until a sound part appears when there is a relatively long silence part in the radio program.

(1-8-8) Second State Transition Reserving Process Procedure

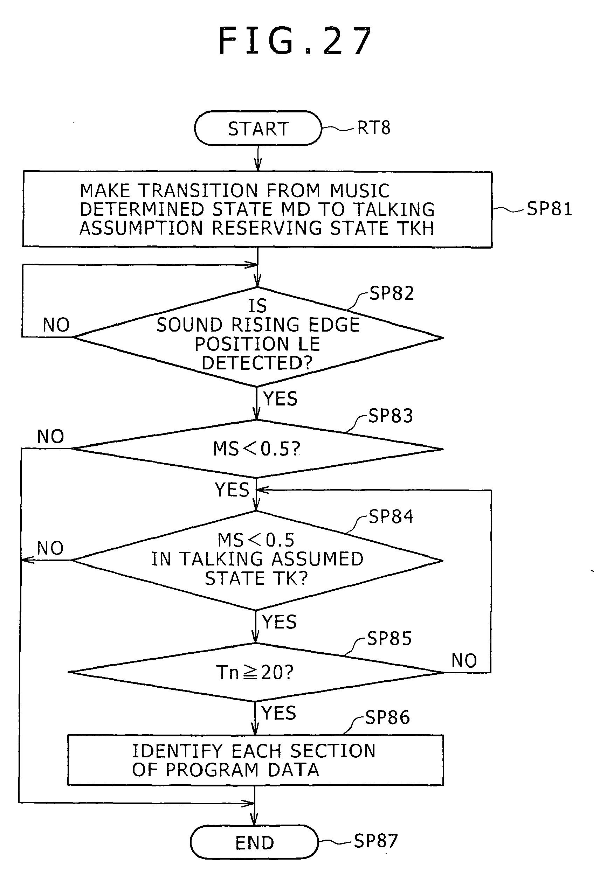

The procedure of the above-described second state transition reserving process will next be described. When the data recording device 10 detects that the musical piece likelihood MS changes to become lower than the determination threshold value while detecting a silence section LS in the music determined state MD, the data recording device 10 starts a second state transition reserving process procedure RT8 as represented in FIG. 27. After the section identifying control unit 31 in the section identifying unit 20 of the data recording device 10 starts the second state transition reserving process procedure RT8, the section identifying control unit 31 in step SP81 changes the processing state from the music determined state MD to the talking assumption reserving state TKH. The section identifying control unit 31 then proceeds to next step SP82.

In step SP82, the section identifying control unit 31 determines whether the sound volume level VS has risen from a silence level to a sound level in the talking assumption reserving state TKH. When a negative result is obtained in step SP82, this indicates that silence is still continued in a radio program. The section identifying control unit 31 therefore repeats step SP82 until the sound volume level VS of the radio program rises from a silence level to a sound level. When a positive result is obtained in step SP82, on the other hand, this indicates that either music is resumed or talking is started in the radio program. The section identifying control unit 31 therefore stores a sound rising edge position LE at which the sound volume level VS rises from a silence level to a sound level as a section boundary candidate position KP. The section identifying control unit 31 then proceeds to next step SP83.

In step SP83, the section identifying control unit 31 in the talking assumption reserving state TKH determines whether the musical piece likelihood MS immediately after the detection of the rising edge of the sound level is lower than the determination threshold value. When a negative result is obtained in step SP83, this indicates that music is simply resumed after a silence part inserted as a part of the musical piece in the radio program. The section identifying control unit 31 therefore proceeds to step SP87.

On the other hand, when a positive result is obtained in step SP83, this indicates that there is a possibility of music being ended and talking being started in the radio program. Therefore, the section identifying control unit 31 changes the processing state from the talking assumption reserving state TKH to the talking assumed state TK, and proceeds to step SP84.

In step SP84, the section identifying control unit 31 determines whether the musical piece likelihood MS continues being lower than the determination threshold value in the talking assumed state TK. When a positive result is obtained in step SP84, this indicates that there is a strong possibility of music being ended and talking being started in the radio program. The section identifying control unit 31 therefore proceeds to next step SP85.

In step SP85, the section identifying control unit 31 determines whether or not the talking assumption continuation time Tn is the talking assumption determination time or more. When a negative result is obtained in step SP85, this indicates that a time necessary to determine whether music is ended and talking is started in the radio program has not elapsed. The section identifying control unit 31 therefore returns to step SP84.

On the other hand, when a positive result is obtained in step SP85, this indicates that music is ended and talking is started in the radio program. The section identifying control unit 31 therefore proceeds to next step SP86.

In step SP86, the section identifying control unit 31 identifies the section change candidate position KP as a section boundary, identifies a side preceding the section boundary in time series in program data as a music part section, and identifies a side succeeding the section boundary in time series in the program data as a talking part section. Then, the section identifying control unit 31 changes the processing state from the talking assumed state TK to the talking determined state TD, and proceeds to step SP87. The second state transition reserving process procedure RT8 is thereby ended.

By the second state transition reserving process procedure RT8, the data recording device 10 reserves processing until a sound part appears when there is a relatively long silence part in the radio program.

(1-9) Operation and Effect

With the above configuration, at a time of recording a talking part in a radio program, the data recording device 10 detects a section boundary candidate range SA in response to the changing of the musical piece likelihood MS of program data corresponding to the radio program being recorded to the determination threshold value or higher, and detects a section boundary candidate position KP in the detected section boundary candidate range SA according to the sound volume level VS. Then, when the musical piece likelihood MS continues being equal to or higher than the determination threshold value for the music assumption determination time, the data recording device 10 identifies a boundary at which a talking part section of the program data changes to a music part section.

Therefore, in a case where switching between talking and music is performed in the radio program without a silence section LS being inserted between the talking and the music, or in a case where the talking and the music in the radio program overlap each other and then the switching between the talking and the music is performed, when there is a variation in sound volume level VS at the position at which the airing of only the music starts, the section identifying control unit 31 detects a range in which the switching from the talking to the music is performed without interruption in the radio program according to the changing of the musical piece likelihood MS to the determination threshold value or higher, and detects the position at which the airing of only the music starts in the radio program according to the lowering of the sound volume level VS in the detected range. The section identifying control unit 31 can thus identify the talking part section and the music part section of the program data. In addition, in this case, the section identifying control unit 31 can avoid including a tail end of the talking part section in a start of the finally identified music part section in the program data.

In addition, at a time of recording a music part in a radio program, the data recording device 10 detects a section boundary candidate range SA in response to the changing of the musical piece likelihood MS of the program data corresponding to the radio program being recorded to a value lower than the determination threshold value, and detects a section boundary candidate position KP in the detected section boundary candidate range SA according to the sound volume level VS. Then, when the musical piece likelihood MS continues being lower than the determination threshold value for the music assumption determination time, the data recording device 10 identifies a boundary at which a music part section of the program data changes to a talking part section.

Therefore, in a case where switching between music and talking is performed in the radio program without a silence section LS being inserted between the music and the talking, or in a case where the music and the talking in the radio program overlap each other and then the switching between the music and the talking is performed, when there is a variation in sound volume level VS at the position at which the airing of the talking starts, the section identifying control unit 31 detects a range in which the switching from the music to the talking is performed without interruption in the radio program according to the changing of the musical piece likelihood MS to a value lower than the determination threshold value, and detects the position at which the airing of the talking starts in the radio program (that is, the position at which the section for airing only the music is ended in the radio program) according to the lowering of the sound volume level VS in the detected range. The section identifying control unit 31 can thus identify the music part section and the talking part section of the program data. In addition, in this case, the section identifying control unit 31 can avoid including a start of the talking part section in a tail end of the finally identified music part section in the program data.

According to the above configuration, the data recording device 10 detects, from program data formed by mixing a music part and a talking part with each other, musical piece likelihood MS indicating a degree of likelihood of the program data being music, and detects sound volume level VS of the program data. According to a result of the detections of the musical piece likelihood MS and the sound volume level VS, the data recording device 10 identifies a music part section corresponding to the music part and a talking part section corresponding to the talking part in the program data. The data recording device 10 records the thus identified program data. Thereby, in recording the program data, the data recording device 10 can identify and record the music part section and the talking part section of the program data, which sections are difficult to identify finally with high accuracy with the musical piece likelihood MS, in such a manner as to compensate for the difficulty by the sound volume level VS, and identify and record the music part section and the talking part section of the program data, which sections are difficult to identify finally with high accuracy with the sound volume level VS, in such a manner as to compensate for the difficulty by the musical piece likelihood MS. Thus, the data recording device 10 can identify music data from program data including the music data with high accuracy, and record the music data.

In addition, in this case, the data recording device 10 identifies the talking part section and the music part section of the program data according to the musical piece likelihood MS with which switching between the talking part section and the music part section in the program data can be detected but it is difficult to identify the specific boundary between the talking part section and the music part section in the program data and the sound volume level VS with which the specific boundary between the talking part section and the music part section in the program data can be identified but it is difficult to detect the switching between the talking part section and the music part section in the program data. The data recording device 10 can thereby identify the talking part section and the music part section of the program data with high accuracy.

Further, the data recording device 10 identifies a section boundary candidate range SA as a range including the boundary between the talking part section and the music part section in the program data according to the musical piece likelihood MS, and identifies a section boundary candidate position KP as a candidate for a position where the switching between the talking part section and the music part section is performed in the section boundary candidate range SA according to the sound volume level VS. Therefore, in a case where switching between talking and music is performed in the radio program without a silence section LS being inserted between the talking and the music, or in a case where the talking and the music in the radio program overlap each other and then the switching between the talking and the music is performed, the data recording device 10 detects a range in which the switching from the talking to the music is performed without interruption in the radio program according to the changing of the musical piece likelihood MS to the determination threshold value or higher, and detects the position at which the talking in the radio program actually changes to the music according to the lowering of the sound volume level VS in the detected range. The data recording device 10 can thus identify the talking part section and the music part section of the program data with high accuracy.

Further, when the musical piece likelihood MS overpasses a predetermined determination threshold value for determining a music part and a talking part of program data after the data recording device 10 detects a silence section LS as a section where silence is continued for a predetermined range or more on the basis of the sound volume level VS, the data recording device 10 identifies a position at which switching between a music part section and a talking part section occurs according to the detected silence section LS. Therefore, in the case where the silence section LS is inserted between the talking and the music in the radio program, the data recording device 10 can identify the talking part section and the music part section of the program data with high accuracy by detecting the silence section LS and then checking the value of the musical piece likelihood MS.

Further, in this case, even when music whose musical piece likelihood MS increases slowly because, for example, a start of the music is very quiet, or only low notes are used is included in the radio program, the data recording device 10 can identify the talking part section and the music part section of the program data as long as a silence section LS is included at a start of the music.

Further, when the data recording device 10 detects a silence section LS on the basis of the sound volume level VS, and the musical piece likelihood MS overpasses the predetermined determination threshold value for determining a music part and a talking part of program data, the data recording device 10 detects a rising edge of the detected silence section LS at which rising edge the sound volume level VS rises to a sound level as a section boundary candidate position KP. The data recording device 10 identifies the section boundary candidate position KP as a section boundary where switching between a talking part section and a music part section occurs in the program data. It is therefore possible to minimize a silence part included at a start of the finally identified music part section or the finally identified talking part section, and thereby improve a listening feeling when the music part section is reproduced afterward.

Further, when a radio program is listened to, the data recording device 10 outputs the radio program from the outputting unit 14, and temporarily stores program data corresponding to the output radio program in the temporary storage unit 16. When the radio program output once is requested to be output again via the operating unit 12, the data recording device 10 subjects the program data corresponding to an output for a predetermined time which program data is read from the temporary storage unit 16 to analog processing by the data processing unit 13, and thereby obtains a program signal. The data recording device 10 outputs the radio program corresponding to the program signal again via the outputting unit 14. Therefore, when the user has missed listening to a part of the radio program being output because the user has gone to a bathroom or the like, the data recording device 10 can output the already output part of the radio program after going back in time series by the predetermined time in response to a request by the user so that the user can listen to the part. Thus, usability can be improved.

Further, when the data recording device 10 identifies a music part section and a talking part section of program data, the data recording device 10 divides the program data into music part section data and talking part section data according to section identifying information DI as a result of the identification, and records the music part section data and the talking part section data. Therefore, when reproducing the recorded program data, the data recording device 10 can allow the user to check the contents by directly accessing and reproducing the music part section data and the talking part section data recorded in a state of being divided from each other without sequentially reproducing the program data from a start of the program data to allow the user to check the contents. Thus, usability can be improved.

(1-10) Other Embodiments

It is to be noted that while in the above-described first embodiment, the radio broadcast wave of a radio station is received, and program data corresponding to a radio program is generated, the present invention is not limited to this, and may be applied to program data generated when a television broadcast of a television station is received, data in a streaming format which data is obtained via a communication line, program data or streaming data already stored in the recording unit, and the like, as long as mixed data in which a music part section and a talking part section are mixed is obtained. In this case, similar effects can be obtained.

In addition, in the above-described first embodiment, when a music part section and a talking part section of program data are identified, the program data is divided into music part section data and talking part section data according to section identifying information DI as a result of the identification, and the music part section data and the talking part section data are recorded as a data file. However, the present invention is not limited to this. The program data may be recorded together with the section identifying information DI without the program data being divided. In this case, the program data and the section identifying information DI may be associated with each other and recorded as another data file, or the section identifying information DI may be stored as header information of the program data and recorded. In addition, a predetermined tag may be added to a corresponding position of the program data according to the section identifying information DI.

Further, in the above-described first embodiment, the determination threshold value is applied as a determination threshold value for the musical piece likelihood MS normalized to a value of 0 to 1. However, the present invention is not limited to this. The determination threshold value may be any value of 0 to 1 according to a condition. In addition, the value of the musical piece likelihood MS does not need to be normalized, and the same is true for the corresponding determination threshold value.

Further, in the above-described first embodiment, the musical piece likelihood MS becoming equal to or higher than the determination threshold value or the musical piece likelihood MS becoming lower than the determination threshold value is expressed as the musical piece likelihood MS overpassing the determination threshold value. However, the present invention is not limited to this. The musical piece likelihood MS exceeding the determination threshold value or the musical piece likelihood MS becoming equal to or lower than the determination threshold value is expressed as the musical piece likelihood MS overpassing the determination threshold value. Thus the determination threshold value may be included in either side according to a setting.

Further, in the above-described first embodiment, when a silence section LS of program data is detected, a position at which a silence state changes to a sound state in the silence section LS is set as a section boundary candidate position KP. However, the present invention is not limited to this. A position at which a first sound state changes to the silence state in the silence section LS may be detected and set as a section boundary candidate position KP.

Further, in the above-described first embodiment, at the time of the second silence detection and section identification process, when a silence section LS is detected in a talking part section of program data, the silence section LS is for example judged to be a silence during talking in the radio program, and thus ignored. However, the present invention is not limited to this. When a silence section LS is detected in a talking part section of program data, a part preceding the silence section LS and a part succeeding the silence section LS may be identified as separate talking part sections.

Further, in the above-described first embodiment, program data is identified as a music part section and a talking part section, that is, a radio program is identified as a music part and a talking part. However, the present invention is not limited to this. A radio program may be divided into parts such as a music part, a talking part, a commercial part, a news part, a traffic information part, and the like according to contents of the radio program, and identified as these parts.

Further, in the above-described first embodiment, the musical piece likelihood detecting unit 18 detects the musical piece likelihood MS, and the sound volume level detecting unit 19 detects the sound volume level VS. However, the present invention is not limited to this. The musical piece likelihood analysis processing unit 33 may detect the musical piece likelihood MS, and the sound volume level analysis processing unit 34 may detect the sound volume level VS. In this case, when the section identifying control unit 31 has the functions of the section identifying control unit 31, the musical piece likelihood analysis processing unit 33, and the sound volume level analysis processing unit 34, similar effects to those of the foregoing first embodiment can be obtained.

Further, the above-described first embodiment has the first to fourth section identifying methods, and a selection is made from among the first to fourth section identifying methods, whereby an arbitrary section identifying method can be carried out. However, the present invention is not limited to this. In addition to carrying out a single method among the first to fourth section identifying methods, a plurality of arbitrary section identifying methods among the first to fourth section identifying methods may be combined with each other and carried out.

(2) Second Embodiment

(2-1) Outline of Second Embodiment

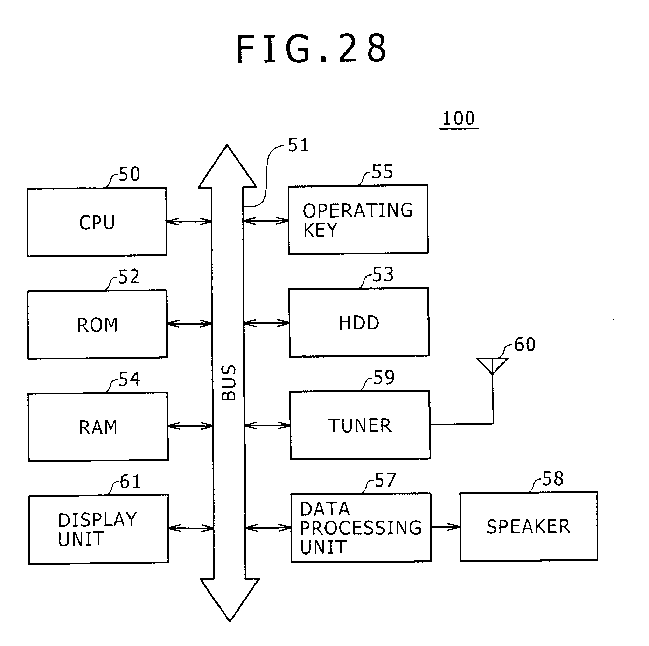

FIG. 28 shows a hardware circuit configuration based on hardware circuit blocks of a data recording device 100 according to a second embodiment. In the data recording device 100, a central processing unit (CPU) 50 and each piece of hardware are connected to each other via a bus 51. The central processing unit 50 expands various programs such as a data recording program and the like read from a ROM (Read Only Memory) 52 or a hard disk drive 53 in a RAM (Random Access Memory) 54, and executes the programs. The central processing unit 50 thereby performs centralized control of the whole and performs various processes.

Thus, when a radio station is selected and the output of a radio program is requested via an operating key 55 provided on a casing or the like of the data recording device 100, for example, the central processing unit 50 sets a tuner 59 to operate so as to extract the radio broadcast wave of the radio station selected by the user among the radio broadcast waves of a plurality of radio stations. In addition, at this time, the central processing unit 50 controls a data processing unit 57 for the output of the radio program. Thus, the tuner 59 extracts the radio broadcast wave of the radio station selected by the user from the radio broadcast waves of the respective radio stations which waves are received by an antenna 60, subjects the radio broadcast wave to predetermined reception processing such as demodulation processing and the like, and sends a program signal of the radio program which signal is obtained as a result of the reception processing to the data processing unit 57. The data processing unit 57 subjects the program signal supplied from the tuner 59 to digital processing such as digital-to-analog conversion processing and equalizing processing and the like, and then subjects program data obtained as a result of the digital processing to analog processing such as digital-to-analog processing, amplification processing and the like. The data processing unit 57 obtains a program signal by performing such analog processing, and sends the program signal to a speaker 58. Thereby the audio of the program based on the program signal is output from the speaker 58 to be listened to by the user. The central processing unit 50 can thus allow the user to listen to the radio program broadcast by the desired radio station.

In addition, when a radio station is selected and the recording of a radio program is requested via the operating key 55, the central processing unit 50 sets the tuner 59 to operate so as to extract the radio broadcast wave of the radio station selected by the user as described above. In addition, at this time, the central processing unit 50 controls the data processing unit 57 for the recording of the radio program. Thus, the tuner 59 extracts the radio broadcast wave of the radio station selected by the user from the radio broadcast waves of the respective radio stations which waves are received by the antenna 60, subjects the radio broadcast wave to the reception processing, and sends a program signal of the radio program which signal is obtained as a result of the reception processing to the data processing unit 57. The data processing unit 57 subjects the program signal supplied from the tuner 59 to digital processing, and sends program data obtained as a result of the digital processing to the central processing unit 50. Then, the central processing unit 50 sends the program data to the hard disk drive 53 to record the program data as a data file. The central processing unit 50 can thus record the radio program broadcast by the desired radio station.

When the reproduction of program data is requested via the operating key 55, the central processing unit 50 reads the program data requested to be reproduced from the hard disk drive 53, and then sends the program data to the data processing unit 57. The data processing unit 57 subjects the program data supplied from the central processing unit 50 to predetermined digital processing, and thereafter subjects the program data resulting from the digital processing to analog processing such as digital-to-analog processing, amplification processing and the like. The data processing unit 57 obtains a program signal by performing such analog processing, and sends the program signal to the speaker 58. Thereby the audio of a radio program based on the program signal is output from the speaker 58 to be listened to by the user. The central processing unit 50 can thus allow the user to listen to the radio program recorded on the hard disk drive 53.

In the data recording device 100, as described above, the central processing unit 50 performs various processes and controls each piece of hardware according to the various programs stored in the ROM 52 or on the hard disk drive 53. Thus, in the data recording device 100, the central processing unit 50 and the data processing unit 57 can be made to function in the same manner as the above-described data processing unit 13 (FIG. 2) by selecting the various programs stored in the ROM 52 or on the hard disk drive 53 appropriately according to the function of the data recording device 10 of the hardware configuration based on the functional circuit blocks described above with reference to FIG. 2.

In addition, in the data recording device 100, the operating key 55 can be made to function in the same manner as the above-described operating unit 12 (FIG. 2), and the central processing unit 50 and the hard disk drive 53 can be made to function in the same manner as the above-described recording unit 15 (FIG. 2). Further, in the data recording device 100, the central processing unit 50, the tuner 59, and the antenna 60 can be made to function in the same manner as the above-described receiving unit 11 (FIG. 2), and the central processing unit 50 and a display unit 61 can be made to function in the same manner as the above-described display unit 17 (FIG. 2). Further, in the data recording device 100, the central processing unit 50 can be made to function in the same manner as each of the musical piece likelihood detecting unit 18 (FIG. 2), the sound volume level detecting unit 19 (FIG. 2), the section identifying unit 20 (FIG. 2), and the dividing unit 21 (FIG. 2) described above. The ROM 52 corresponds to the above-described temporary storage unit 16 (FIG. 2). The speaker 58 corresponds to the above-described outputting unit 14 (FIG. 2).

Thus, by selecting the various programs stored in the ROM 52 or on the hard disk drive 53 appropriately according to the functions of the data recording device 10, the data recording device 100 can perform similar processes to the above-described processes of the data recording device 10, and thus provide similar effects to those of the foregoing first embodiment.

(2-2) Other Embodiments

It is to be noted that while in the above-described second embodiment, a data recording device according to the present invention is applied to the data recording device 100 described above with reference to FIG. 28, the present invention is not limited to this, and is widely applicable to various other data recording devices such as HDD (Hard Disk Drive) video recorders, optical disk recorders, semiconductor memory type recorders, portable telephones having a radio recording function, portable audio players having a radio recording function, personal computers and the like.

In addition, in the above-described second embodiment, the central processing unit 50 described above with reference to FIG. 28 is applied as a musical piece likelihood detecting unit for detecting, from mixed data formed by mixing a music part and a talking part with each other, musical piece likelihood indicating a degree of likelihood of the mixed data being music. However, the present invention is not limited to this. It is possible to widely apply various other musical piece likelihood detecting units, such for example as a musical piece likelihood detecting circuit of a hardware configuration for detecting, from mixed data formed by mixing a music part and a talking part with each other, musical piece likelihood indicating a degree of likelihood of the mixed data being music.

Further, in the above-described second embodiment, the central processing unit 50 described above with reference to FIG. 28 is applied as a sound volume level detecting unit for detecting the sound volume level of the mixed data. However, the present invention is not limited to this. It is possible to widely apply various other sound volume level detecting units, such for example as a sound volume level detecting circuit of a hardware configuration for detecting the sound volume level of the mixed data.

Further, in the above-described second embodiment, the central processing unit 50 described above with reference to FIG. 28 is applied as a section identifying unit for identifying a music part section corresponding to a music part and a talking part section corresponding to a talking part in mixed data according to the musical piece likelihood detected by the musical piece likelihood detecting unit and the sound volume level detected by the sound volume level detecting unit. However, the present invention is not limited to this. It is possible to widely apply various other section identifying units, such for example as a section identifying circuit of a hardware configuration for identifying a music part section corresponding to a music part and a talking part section corresponding to a talking part in mixed data according to the musical piece likelihood detected by the musical piece likelihood detecting unit and the sound volume level detected by the sound volume level detecting unit.

Further, in the above-described second embodiment, the hard disk drive 53 described above with reference to FIG. 28 is applied as a recording unit for recording mixed data in which a music part section and a talking part section are identified by the section identifying unit. However, the present invention is not limited to this. It is possible to widely apply recording units for recording the mixed data on various other recording media, such as optical disk recorders, cassette tape recorders, semiconductor memory type recorders, and the like.

Further, in the above-described second embodiment, the tuner 59 and the antenna 60 described above with reference to FIG. 28 are applied as a receiving unit for receiving a broadcast wave output according to a program in which a music part and a talking part are mixed with each other and generating a received signal. However, the present invention is not limited to this. It is possible to widely apply various other receiving units such for example as a tuner provided integrally with an antenna.

Further, in the above-described second embodiment, the central processing unit 50 and the data processing unit 57 described above with reference to FIG. 28 are applied as a data processing unit for generating mixed data from the received signal generated by the receiving unit. However, the present invention is not limited to this. It is possible to widely apply various other data processing units, such for example as a data processing circuit of a hardware configuration for generating mixed data from the received signal generated by the receiving unit.

Further, in the above-described second embodiment, the central processing unit 50 described above with reference to FIG. 28 is applied as a dividing unit for dividing mixed data whose music part section and talking part section are identified by the section identifying unit into music part section data of the music part section and talking part section data of the talking part section. However, the present invention is not limited to this. It is possible to widely apply various other dividing units, such for example as a dividing circuit of a hardware configuration for dividing mixed data whose music part section and talking part section are identified by the section identifying unit into music part section data of the music part section and talking part section data of the talking part section.

Further, in the above-described second embodiment, the various programs such as the data recording program and the like are recorded in the ROM 52 or on the hard disk drive 53. However, the present invention is not limited to this. The various programs such as the data recording program and the like may be recorded on a recording medium, and then read from the recording medium and executed, or the various programs such as the data recording program and the like may be installed from the recording medium into the ROM 52 or onto the hard disk drive 53 and thereafter executed.

Further, in the first embodiment and the second embodiment described above, the program data of a radio program broadcast from a radio station as described above with reference to FIGS. 1 to 28 is applied as mixed data formed by mixing a music part and a talking part with each other. However, the present invention is not limited to this. Various mixed data, such as video data of a television program broadcast from a television station, audio content data and moving image content data on the Internet, and the like, may be applied. In addition to this, program data or the like recorded on another recording medium may be read to perform the above-described processes. Kinds of mixed data and methods for obtaining mixed data are not specifically limited.

The present invention can be applied to a data recording device that records the program data of a radio program broadcast from a radio station.

It should be understood by those skilled in the art that various modifications, combinations, subcombinations and alterations may occur depending on design requirements and other factors insofar as they are within the scope of the appended claims or the equivalents thereof.

**Claims**

**1.** A data recording device comprising:

a feature quantity detecting unit configured to detect a predetermined feature quantity of mixed data in which a music part and a talking part are mixed;
a sound volume level detecting unit configured to detect sound volume level of said mixed data;
a section identifying unit configured to identify a music part section corresponding to said music part and a talking part section corresponding to said talking part in said mixed data on a basis of said feature quantity and said sound volume level; and
a recording unit configured to record said mixed data including said music part section and said talking part section identified by said section identifying unit.

**2.** The data recording device as claimed in claim 1, further comprising:

a receiving unit configured to receive a broadcast wave of a program in which said music part and said talking part are mixed, and output a received signal; and
a data processing unit configured to generate said mixed data on a basis of said received signal;

wherein said feature quantity detecting unit detects the feature quantity of said mixed data generated by said data processing unit, and
said sound volume level detecting unit detects the sound volume level of said mixed data generated by said data processing unit.

**3.** The data recording device as claimed in claim 1, further comprising a data processing unit configured to read data recorded in said recording unit,
wherein mixed data including said music part section and said talking part section that are yet to be identified by said section identifying unit is recorded in said recording unit in advance,
said data processing unit reads said mixed data recorded in said recording unit in advance,
said feature quantity detecting unit detects said feature quantity of said mixed data read by said data processing unit, and
said sound volume level detecting unit detects said sound volume level of said mixed data read by said data processing unit.

**4.** The data recording device as claimed in claim 1,
wherein said section identifying unit identifies a predetermined boundary range including a boundary between said music part section and said talking part section in said mixed data on a basis of said feature quantity, and identifies the boundary between said music part section and said talking part section, the boundary between said music part section and said talking part section being included in said boundary range, on the basis of said sound volume level.

**5.** The data recording device as claimed in claim 4,
wherein said section identifying unit detects a position at which said feature quantity overpasses a predetermined determination threshold value as a reference position, and identifies said boundary range on a basis of the detected reference position.

**6.** The data recording device as claimed in claim 5,
wherein when a state in which said feature quantity has overpassed said determination threshold value is continued for a predetermined determination time, said section identifying unit identifies said boundary between said music part section and said talking part section, said boundary between said music part section and said talking part section being included in said boundary range, on the basis of said sound volume level.

**7.** The data recording device as claimed in claim 5,
wherein when a state in which said feature quantity has overpassed said determination threshold value is not continued for a predetermined determination time, said section identifying unit does not identify said boundary between said music part section and said talking part section, said boundary between said music part section and said talking part section being included in said boundary range.

**8.** The data recording device as claimed in claim 4,
wherein said section identifying unit detects a lowest sound volume level position at which the sound volume level is lowest within said boundary range, and identifies said boundary between said music part section and said talking part section, said boundary between said music part section and said talking part section being included in said boundary range, on a basis of the detected lowest sound volume level position.

**9.** The data recording device as claimed in claim 4,
wherein said section identifying unit detects a silence section in which silence is continued for a predetermined range or more within said boundary range on the basis of said sound volume level, and identifies said boundary between said music part section and said talking part section, said boundary between said music part section and said talking part section being included in said boundary range, on a basis of the detected said silence section.

**10.** The data recording device as claimed in claim 9,
wherein said section identifying unit identifies said boundary between said music part section and said talking part section, said boundary between said music part section and said talking part section being included in said boundary range, on a basis of a position at which said silence is detected first on the basis of said sound volume level in the detected said silence section.

11. The data recording device as claimed in claim 9,
wherein said section identifying unit identifies said boundary between said music part section and said talking part section, said boundary between said music part section and said talking part section being included in said boundary range, on a basis of a position at which sound is detected first after the detected said silence section on the basis of said sound volume level.

12. The data recording device as claimed in claim 1,
wherein when said feature quantity overpasses a predetermined determination threshold value after said section identifying unit detects a silence section in which silence is continued for a predetermined range or more on the basis of said sound volume level, said section identifying unit identifies a boundary between said music part section and said talking part section on a basis of the detected said silence section.

13. The data recording device as claimed in claim 12,
wherein when said feature quantity does not overpass the predetermined determination threshold value after said section identifying unit detects said silence section in which the silence is continued for the predetermined range or more on the basis of said sound volume level, said section identifying unit divides said music part section into two music part sections by said silence section or divides said talking part section into two talking part sections by said silence section.

14. The data recording device as claimed in claim 12,
wherein said section identifying unit identifies said boundary between said music part section and said talking part section, said boundary between said music part section and said talking part section being included in said boundary range, on a basis of the detected said silence section and a position at which said silence is detected first on the basis of said sound volume level.

15. The data recording device as claimed in claim 12,
wherein said section identifying unit identifies said boundary between said music part section and said talking part section, said boundary between said music part section and said talking part section being included in said boundary range, on a basis of a position at which sound is detected first after said silence section on the basis of said sound volume level.

16. The data recording device as claimed in claim 1,
wherein said section identifying unit generates section identifying information on a basis of the identified said music part section and the identified said talking part section of said mixed data, and
said recording unit records said mixed data and said section identifying information.

17. The data recording device as claimed in claim 1,
wherein said section identifying unit generates section identifying information on a basis of the identified said music part section and the identified said talking part section of said mixed data, and adds said section identifying information to said mixed data, and
said recording unit records said mixed data to which said section identifying information is added.

18. The data recording device as claimed in claim 1, further comprising a dividing unit configured to divide said mixed data into music part section data of said music part section and talking part section data of said talking part section on a basis of said music part section and said talking part section identified by said section identifying unit,
wherein said recording unit records said music part section data and said talking part section data divided by said dividing unit as said mixed data.

19. The data recording device as claimed in claim 2, further comprising:

an outputting unit configured to perform output on a basis of said mixed data read by said data processing unit; and
a temporary storage unit configured to temporarily store said mixed data in parallel with the output by said outputting unit when said outputting unit outputs said mixed data.

**20.** The data recording device as claimed in claim 2,
wherein said broadcast wave is a broadcast wave broadcast by a radio broadcasting station.

**21.** The data recording device as claimed in claim 1,
wherein said mixed data is formed in a stream format.

**22.** A data recording method comprising the steps of:

detecting a predetermined feature quantity and sound volume level of mixed data in which a music part and a talking part are mixed;
identifying a music part section corresponding to said music part and a talking part section corresponding to said talking part in said mixed data on a basis of said feature quantity and said sound volume level; and
recording said mixed data including the identified said music part section and the identified said talking part section.

**23.** A computer readable recording medium on which a program is recorded, said program making a computer perform the steps of:

detecting a predetermined feature quantity and sound volume level of mixed data in which a music part and a talking part are mixed;
identifying a music part section corresponding to said music part and a talking part section corresponding to said talking part in said mixed data on a basis of said feature quantity and said sound volume level; and
recording said mixed data including the identified said music part section and the identified said talking part section.

**24.** A data recording device comprising:

feature quantity detecting means for detecting a predetermined feature quantity of mixed data in which a music part and a talking part are mixed;
sound volume level detecting means for detecting sound volume level of said mixed data;
section identifying means for identifying a music part section corresponding to said music part and a talking part section corresponding to said talking part in said mixed data on a basis of said feature quantity and said sound volume level; and
recording means for recording said mixed data including said music part section and said talking part section identified by said section identifying means.

# F I G . 1

1

| MUSICAL PIECE LIKEHOOD (FEATURE QUANTITY) DETECTING UNIT | → | SECTION IDENTIFYING UNIT | → | RECORDING UNIT |

2 → 4 → 5

SOUND VOLUME LEVEL DETECTING UNIT

3

# F I G . 2

10

| MUSICAL PIECE LIKEHOOD (FEATURE QUANTITY) DETECTING UNIT | 18 | | OPERATING UNIT | 12 |

22

| SECTION IDENTIFYING UNIT | 20 | | RECORDING UNIT | 15 |

| SOUND VOLUME LEVEL DETECTING UNIT | 19 | BUS | RECEIVING UNIT | 11 |

| DIVIDING UNIT | 21 | | DATA PROCESSING UNIT | 13 | → | OUTPUTTING UNIT | 14 |

| DISPLAY UNIT | 17 | | TEMPORARY STORAGE UNIT | 16 |

# FIG.3

20

32
INPUT PROCESSING UNIT

33
MUSICAL PIECE LIKELIHOOD ANALYSIS PROCESSING UNIT

31
SECTION IDENTIFYING CONTROL UNIT

34
SOUND VOLUME LEVEL ANALYSIS PROCESSING UNIT

35
OUTPUT PROCESSING UNIT

DD

# FIG.4

# FIG.5

MS < 0.5

TD

TALKING
DETERMINED
STATE

MS ≧ 0.5

MS < 0.5

MK

MUSIC
ASSUMED
STATE

MS ≧ 0.5, Tm < 30

MS < 0.5, Tn ≧ 20

MS ≧ 0.5, Tm ≧ 30

TK

TALKING
ASSUMED
STATE

MS < 0.5

MS ≧ 0.5

MD

MUSIC
DETERMINED
STATE

MS < 0.5, Tn < 20

MS ≧ 0.5

EP 1 903 575 A2

FIG.6

# FIG.7

MS<0.5

**TALKING DETERMINED STATE** (TD)

MS≧0.5 →

← MS<0.5

**MUSIC ASSUMED STATE** (MK)

MS≧0.5, Tm<30

LS

MS<0.5, Tr≧20

MS≧0.5, Tr<20

MS≧0.5, Tm≧30

**MUSIC ASSUMPTION STANDBY STATE** (MKT)

MS<0.5, Tr<20

**MUSIC DETERMINED STATE** (MD)

MS≧0.5

EP 1 903 575 A2

# F I G . 8

# FIG.9

EP 1 903 575 A2

EP 1 903 575 A2

FIG.10

# FIG.11

EP 1 903 575 A2

# FIG.12

MS < 0.5

MS ≧ 0.5, Tm < 30

TD

MK

TALKING DETERMINED STATE

MS ≧ 0.5

MS < 0.5

MUSIC ASSUMED STATE

MS < 0.5, Tt < 20

MS ≧ 0.5, Tt ≧ 20, Tm < 30

LS

MS ≧ 0.5, Tm ≧ 30

TDT

MD

TALKING DETERMINATION STANDBY STATE

MUSIC DETERMINED STATE

MS ≧ 0.5
Tt ≧ 20
Tm ≧ 30

MS ≧ 0.5, Tt < 20

MS ≧ 0.5

EP 1 903 575 A2

FIG.13

# FIG.14

FIG.15

# FIG.16

EP 1 903 575 A2

# FIG.17

MS＜0.5

TD
TALKING
DETERMINED
STATE

TKH
TALKING
ASSUMPTION
RESERVING
STATE

LS

MS＜0.5, Tn≧20

MS＜0.5, LE

MS＜0.5, LE

MS≧0.5, LE

TK
TALKING
ASSUMED
STATE

MS＜0.5

MD
MUSIC
DETERMINED
STATE

MS≧0.5

MS＜0.5, Tn＜20

MS≧0.5

EP 1 903 575 A2

# FIG.18

# FIG.19

# FIG.20

```
         ┌─────────────────┐
         │     START       │──RT1
         └─────────────────┘
                  │
                  ▼
┌──────────────────────────────────────────┐
│ STORE LOWEST SOUND VOLUME LEVEL           │
│ POSITION LL DETECTED WITHIN SECTION       │──SP1
│ BOUNDARY CANDIDATE RANGE SA AS            │
│ SECTION BOUNDARY CANDIDATE POSITION       │
└──────────────────────────────────────────┘
                  │
                  ▼
            ╱─────────────╲           SP2
          ╱    MS ≧ 0.5     ╲        NO
        ╱   IN MUSIC ASSUMED   ╲──────────┐
          ╲    STATE MK?      ╱           │
            ╲─────────────╱               │
                  │ YES                   │
                  ▼         SP3           │
            ╱─────────────╲               │
   NO     ╱                ╲              │
  ┌──────╱    Tm ≧ 30?      ╲             │
  │       ╲                ╱              │
  │         ╲─────────────╱               │
  │               │ YES      SP4          │
  │               ▼                       │
  │   ┌──────────────────────┐            │
  │   │ IDENTIFY EACH SECTION │            │
  │   │ OF PROGRAM DATA       │            │
  │   └──────────────────────┘            │
  │               │                       │
  │               ▼◄──────────────────────┘
  │         ┌─────────────┐
  │         │     END     │──SP5
  │         └─────────────┘
  └───────────────┘
```

# FIG.21

START — RT2

STORE LOWEST SOUND VOLUME LEVEL
POSITION LL DETECTED WITHIN SECTION
BOUNDARY CANDIDATE RANGE SA AS — SP11
SECTION BOUNDARY CANDIDATE POSITION

SP12

$MS < 0.5$
IN TALKING ASSUMED
STATE TK?

NO

YES

SP13

NO

$Tn \geqq 20$?

YES

SP14

IDENTIFY EACH SECTION
OF PROGRAM DATA

END — SP15

# FIG.22

START — RT3

STORE RISING EDGE OF DETECTED SILENCE
SECTION LS AS SECTION BOUNDARY
CANDIDATE POSITION KP — SP31

$MS \geqq 0.5$
IN MUSIC ASSUMPTION
STANDBY STATE
MKT? — SP32

YES

NO

$Tr \geqq 20?$ — SP33

NO

YES

$MS \geqq 0.5$
IN MUSIC ASSUMED
STATE MK? — SP34

NO

YES

$Tm \geqq 30?$ — SP35

NO

YES

IDENTIFY EACH SECTION
OF PROGRAM DATA — SP36

END — SP37

EP 1 903 575 A2

# FIG.23

```
        ┌─────────────┐
        │    START    │──RT4
        └──────┬──────┘
               ▼
┌──────────────────────────────┐
│ STORE RISING EDGE OF DETECTED SILENCE │──SP41
│ SECTION LS AS SECTION BOUNDARY        │
│ CANDIDATE POSITION KP                 │
└──────────────┬───────────────┘
               ▼
         ◇ SP42                    YES
    MS<0.5
    IN TALKING ASSUMPTION ─────────────┐
    STANDBY STATE TKT?                  │
         │ NO                           │
         ▼ SP43                         │
    NO   Ts≧10?                         │
   ┌─────◇                             │
   │     │ YES  SP44                    │
   │     ▼                              │
   │  IDENTIFY CONSECUTIVE MUSIC        │
   │  PART SECTIONS OF PROGRAM DATA     │
   │     │                             SP45
   │     │       NO    MS<0.5
   │     │◄──────────  IN TALKING ASSUMED
   │     │             STATE TK?
   │     │                 │ YES     SP46
   │     │                 ▼              NO
   │     │             Tn≧20? ────────────┐
   │     │                 │ YES  SP47     │
   │     │                 ▼               │
   │     │          IDENTIFY EACH SECTION  │
   │     │          OF PROGRAM DATA        │
   │     ▼◄──────────────────────────────┘
   │  ┌───────┐
   │  │  END  │──SP48
   │  └───────┘
```

# FIG.24

START — RT5

MAKE TRANSITION FROM MUSIC ASSUMED STATE MK TO TALKING DETERMINATION STANDBY STATE TDT — SP51

SP52

MS < 0.5 IN TALKING DETERMINATION STANDBY STATE TDT?

YES

NO

SP53

Tt ≧ 20?

NO

YES

SP54

Tm ≧ 30?

YES

NO

SP55

MS ≧ 0.5?

NO

YES

SP56

Tm ≧ 30?

NO

YES

SP57

IDENTIFY EACH SECTION OF PROGRAM DATA

END — SP58

# FIG.25

START —RT6

MAKE TRANSITION FROM TALKING ASSUMED STATE TK TO MUSIC DETERMINATION STANDBY STATE MDT —SP61

SP62
$MS \geqq 0.5$ IN MUSIC DETERMINATION STANDBY STATE MDT?
YES / NO

SP63
$Tu \geqq 10$? — NO
YES

SP64
$Tn \geqq 20$? — YES
NO

SP65
$MS < 0.5$? — NO
YES

SP66
$Tn \geqq 20$? — NO
YES

SP67
IDENTIFY EACH SECTION OF PROGRAM DATA

END —SP68

EP 1 903 575 A2

# FIG.26

START ～RT7

MAKE TRANSITION FROM TALKING
DETERMINED STATE TD TO MUSIC
ASSUMPTION RESERVING STATE MKH ～SP71

IS
SOUND RISING EDGE
POSITION LE
DETECTED? ～SP72

NO

YES

MS≧0.5? ～SP73

NO

YES

MS≧0.5
IN MUSIC ASSUMED
STATE MK? ～SP74

NO

YES

Tm≧30? ～SP75

NO

YES

IDENTIFY EACH SECTION
OF PROGRAM DATA ～SP76

END ～SP77

61

# FIG.27

START — RT8

MAKE TRANSITION FROM MUSIC
DETERMINED STATE MD TO TALKING
ASSUMPTION RESERVING STATE TKH — SP81

IS
SOUND RISING EDGE
POSITION LE
DETECTED? — SP82

NO

YES

$MS < 0.5$? — SP83

NO

YES

$MS < 0.5$
IN TALKING ASSUMED
STATE TK? — SP84

NO

YES

$Tn \geqq 20$? — SP85

NO

YES

IDENTIFY EACH SECTION
OF PROGRAM DATA — SP86

END — SP87

# FIG.28

**EP 1 903 575 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006256501 A

- JP HEI1051337 A